(19) Europäisches Patentamt
European Patent Office
Office européen des brevets

(11) EP 1 474 494 B1

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **02722172.0**

(22) Anmeldetag: **04.03.2002**

(51) Int Cl.:
***C09J 153/00*** *(2006.01)* ***C09J 153/02*** *(2006.01)*
***C08L 53/00*** *(2006.01)* ***C08L 53/02*** *(2006.01)*
***C08F 293/00*** *(2006.01)*

(86) Internationale Anmeldenummer:
**PCT/EP2002/002310**

(87) Internationale Veröffentlichungsnummer:
**WO 2003/000819 (03.01.2003 Gazette 2003/01)**

(54) **STRIPFÄHIGE SYSTEME, MINDESTENS ENTHALTEND EINE HAFTKLEBEMASSE AUF BASIS VON ZUMINDEST EINEM BLOCKCOPOLYMER MIT DER EINHEIT P(A)-P(B)-P(A)**

STRIPPABLE SYSTEMS CONTAINING AT LEAST ONE ADHESIVE MASS BASED ON AT LEAST ONE BLOCK COPOLYMER HAVING THE UNIT P(A)-P(B)-P(A)

SYSTEMES PELABLES COMPRENANT AU MOINS UNE MASSE ADHESIVE A BASE D'AU MOINS UN COPOLYMERE SEQUENCE PRESENTANT L'UNITE P(A)-P(B)-P(A)

(84) Benannte Vertragsstaaten:
**AT BE CH CY DE DK ES FI FR GB GR IE IT LI LU MC NL PT SE TR**

(30) Priorität: **20.06.2001 DE 10129608**

(43) Veröffentlichungstag der Anmeldung:
**10.11.2004 Patentblatt 2004/46**

(73) Patentinhaber: **tesa SE**
**22848 Norderstedt (DE)**

(72) Erfinder:
- **DOLLASE, Thilo**
**22391 Hamburg (DE)**
- **HUSEMANN, Marc**
**22605 Hamburg (DE)**
- **LÜHMANN, Bernd**
**22844 Norderstedt (DE)**

(74) Vertreter: **Stubbe, Andreas**
**tesa SE**
**Kst. 9500**
**Hugo-Kirchberg-Strasse 1**
**22848 Norderstedt (DE)**

(56) Entgegenhaltungen:
**EP-A- 0 349 270** **EP-A- 0 863 184**
**EP-A- 1 008 640** **WO-A-00/39233**
**WO-A-95/06691** **US-A- 4 007 311**
**US-A- 5 098 959** **US-A- 5 403 658**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 474 494 B1

## Beschreibung

Die Erfindung betrifft die Verwendung einer Haftklebemasse auf Basis von zumindest einem Blockcopolymer in stripfähigen Systemen.

Für das rückstands- und zerstörungsfreie Wiederablösen von Selbstklebebändern durch Verstrecken parallel zu ihrer Verklebungsebene werden an die entsprechenden Selbstklebebänder (im nachfolgenden auch als stripfähige Selbstklebebänder bezeichnet) sehr besondere Anforderungen gestellt. Zum einen müssen entsprechende Klebebänder hoch dehnbar sein, da erst die dehnende Verformung die gewünschte Ablösung vom Substrat erlaubt. Des weiteren ist für entsprechende Selbstklebebänder eine hohe Kohäsion erforderlich, damit die Selbstklebebänder unter der beim Ablöseprozeß nötigen Zugbeanspruchung nicht reißen. Von spezieller Bedeutung ist die Anforderung, daß mit der Verstreckung der Selbstklebebänder beim Ablösen ein signifikanter Verlust der Anfaßklebrigkeit (Tack) auftritt. Erst ein solcher Tackverlust stellt sicher, daß der verstreckte Selbstklebestreifen beim Ablöseprozeß nicht im verstreckten Zustand mit einem der Verklebungspartner im gedehnten Zustand verklebt. Käme es nicht zu einem solchen Tackverlust, so würde dies in zahlreichen Fällen dazu führen, daß entsprechend verklebte Selbstklebebänder nicht mehr zerstörungsfrei aus der Klebfuge herausgezogen werden können.

Durch dehnendes Verstrecken in ihrer Verklebungsebene rückstands- und zerstörungsfrei von unterschiedlichsten Substraten wiederablösbare Selbstklebebänder finden breite Anwendung bei der reversiblen klebenden Befestigung von leichten bis mittelschweren Gegenständen vor allem im Wohn- und Bürobereich. Die in der Patentliteratur beschriebenen stripfähigen Selbstklebebänder nutzen ein- und mehrschichtige Produktaufbauten. Einschichtige Produkte sind z. B. in der DE 33 31 016 A1 beschrieben. Bei den mehrschichtigen Produktaufbauten lassen sich solche unterscheiden, bei denen die für den rückstands- und zerstörungsfreien Ablöseprozeß benötigte Zugfestigkeit der Klebestreifen im wesentlichen von einer Trägerfolie oder einem schaumstoffhaltigen Träger vermittelt wird - Beispiele für vorgenannte Selbstklebebänder finden sich u. a. in US 4,024,312, WO 92/11332, WO 92/11333, WO 95/06691 und DE 195 31 696 A1 -, und solchen, bei denen die Zugfestigkeit im wesentlichen über die Haftklebemasse vermittelt wird. Beispiele letztgenannter Produkte sind u. a. in DE 196 49 727 A1, DE 196 49 728 A1, DE 196 49 729 A1, DE 197 20 145 A1 und DE 198 20 858 A1 beschrieben. DE 197 08 366 A1 beschreibt mehrschichtige stripfähige Selbstklebebänder, die aus mehreren Schichten bestehen und als Basiselastomer Styrolblockcopolymere enthalten. Unter dem Begriff Styrolblockcopolymere soll im folgenden die Materialklasse der aus mindestens einem Polystyrol- und mindestens einem Polydien-Block (oder dessen partiell oder vollständig hydriertem Analogon) aufgebauten Blockcopolymere verstanden werden. Entsprechender Mehrschichtaufbau erlaubt insbesondere gegenüber DE 33 31 016 A1 eine selektive Steuerung ausgewählter für stripfähige Selbstklebebänder signifikanter Eigenschaftsparameter wie z. B. der Stripkraft, der Adhäsion sowie ebenfalls der Alterungsstabilität z. B. gegen Ozonolyse.

Spezielle Ausführungsformen und Anwendungen zuvor genannter stripfähiger Selbstklebebänder sind in DE 42 22 849 A1, DE 44 28 587 A1, DE 44 31 914 A1, DE 198 42 864 A1, DE 198 42 865 A1, DE 199 38 693 A1 und WO 98/03601 A1 sowie in DE 42 33 872 A1, DE 195 11 288 A1, US 5,672,402 A und WO 94/21157 A1 beschrieben.

Während die zuvor vorgestellte Patentliteratur eine große Anzahl unterschiedlicher Haftklebemassesysteme beschreibt, z. B. solche auf Basis von Naturkautschuk-Harz-Gemischen, auf Basis von Styrolblockcopolymer-Harz-Gemischen sowie auf Basis von statistischen Acrylatcopolymeren, so nutzen im Markt erhältliche stripfähige Selbstklebebänder doch ausschließlich Haftklebemassen auf Basis von Styrolblockcopolymer-Harz Gemischen, so etwa die Produkte Command® Adhesive der Minnesota Mining and Manufacturing Co. Inc., St. Paul (USA), die tesa® Powerstrips® der Beiersdorf AG, Hamburg (D) sowie Plastofix® Formula Force 1000 der Fa. Plasto S.A. (F). Mit Ausnahme der tesa® Powerstrips® Deco, die Polymere auf Basis gesättigter Elastomerblöcke enthalten, werden dabei Styrolblockcopolymere auf Basis von im Elastomerblock ungesättigten Polymerblöcken verwendet.

Vorteile entsprechender styrolblockcopolymerbasierender Haftklebemassen für den Einsatz in stripfähigen Selbstklebebändern sind:

- ihre sehr hohe Dehnbarkeit. Reißdehnungen liegen bei zumeist größer 400 %, bevorzugt bei größer 600 %, besonders bevorzugt bei größer 800 %.
- die gleichzeitig sehr niedrigen Spannungswerte bei mittleren Verstreckungsgraden im Bereich zwischen ca. 200 % und 400 % Dehnung, welche u. a. sehr niedrige Ablösekräfte (Stripkräfte) ermöglichen.
- ihre trotz hoher Dehnbarkeit und niedrigen Spannungswerten bei o. g. mittleren Verstreckungsgraden sehr hohe Zugfestigkeit, die eine wesentliche Voraussetzung für den rückstands- und zerstörungsfreien Wiederablöseprozeß darstellt, insbesondere, wenn die Haftklebemasse selbst zur Zugfestigkeit des Selbstklebebandes beiträgt.
- ihre Fähigkeit, unter Dehnung eine deutlich verringerte Anfaßklebrigkeit (Tack) auszuweisen, was eine wesentliche Voraussetzung ist, um beim Herauslösen aus der Klebfuge nicht unter Verstreckung mit einem der Substrate zu verkleben. Entsprechend unter Dehnung verklebte Selbstklebestreifen sind in zahlreichen Fällen durch weitere Verstreckung nicht mehr zerstörungsfrei aus einer Klebfuge herauszulösen.
- die mit ihnen erreichbaren hervorragenden Verklebungsfestigkeiten auf einer breiten Anzahl von Haftgründen unterschiedlichster Polarität.

Vorteile einschichtiger stripfähiger Selbstklebebänder auf Basis von Styrolblockcopolymeren sind der einfache Produktaufbau, der durch einen wenig komplexen, kostengünstigen Produktionsprozeß zugänglich ist, die Realisierung eines weiten Dickenbereiches, die prinzipielle Möglichkeit der Herstellung transparenter, insbesondere wasserklar transparenter Klebebänder sowie für die Herstellung von Stanzlingen ein einfacher und gut beherrschbarer Stanzprozeß. Vorteile mehrschichtiger Selbstklebebänder, bestehend aus multiplen styrolblockcopolymerbasierenden Schichten, sind die gute Zugänglichkeit mittels Coextrusion und die breite Variationsmöglichkeit von Schichtstärken und Schichtzusammensetzung, die eine weitgehende unabhängige Steuerung von Oberflächen- (Adhäsion) und Volumeneigenschaften (Kohäsion) ermöglicht.

Nachteile styrolblockcopolymerbasierender Haftklebemassen sind im Falle der Verwendung von Systemen, die im Elastomerblock ungesättigte Polymerketten nutzen, z. B. bei Verwendung von Styrol-Isopren-Styrol- (SIS) und Styrol-Butadien-Styrol- (SBS) Blockcopolymeren, die geringe Alterungsbeständigkeit gegenüber ultravioletter Strahlung sowie gegen thermooxidativen Abbau und gegen Ozonolyse. So kann der Vorteil wasserklar transparenter Selbstklebebänder durchweg nicht genutzt werden, da die Haftklebemasse vor Lichteinfall geschützt werden muß. Dies geschieht z. B. durch lichtabsorbierende Additive wie Titandioxid, deren Compoundierung zu nicht transparenten Produkten führt. Styrolblockcopolymere mit chemisch gesättigten Elastomerblöcken, z. B. die hydrierten Analoga von SBS und SIS Styrol-Ethylen/Butylen-Styrol (SEBS) und Styrol-Ethylen/Propylen-Styrol (SEPS), weisen zwar eine deutlich verbesserte Alterungsbeständigkeit auf, benötigen daher typischerweise keine lichtabsorbierenden Additive und können so leichter zu wasserklaren Produkten verarbeitet werden. Als Nachteil erweist sich jedoch, daß typischerweise nicht das gute Verhältnis von Verklebungsfestigkeit und niedrigen Wiederablösekräften, wie es von SIS- und SBSbasierenden Haftklebemassen bekannt ist, erreicht wird. Gleichzeitig ist bei Nichtverwendung von Plastifizierungsmitteln (z. B. Flüssigharze, aliphatische Öle), die für viele Formulierungen wünschenswert sind, die Auswahl von ausreichend verträglichen Klebharzen im Vergleich zu z. B. SIS merklich eingeschränkt.

Ein weiterer Nachteil stripfähiger Selbstklebebänder, welche styrolblockcopolymerbasierende Haftklebemassen nutzen, besteht darin, daß bei UV-Exposition der Haftklebemassen vor ihrer eigentlichen Verwendung diese eine deutliche Reduzierung der erreichbaren Verklebungsfestigkeiten erleiden können und mithin ein nicht unerheblicher Aufwand bzgl. einer UV-impermeablen Verpackung betrieben werden muß, wenn dem Kunden eine gleichmäßig hohe Verklebungsleistung garantiert werden soll. Vorgenanntes gilt nicht nur für den Einsatz von im Elastomerblock ungesättigten Styrolblockcopolymeren, sondern z. B. auch bei Verwendung von SEBS und SEPS. Bei Verklebung auf UV-transparenten Untergründen, z. B. auf Fensterglas oder transparenten Kunststoffoberflächen, besteht insbesondere bei Einsatz von im Elastomerblock ungesättigten Styrolblockcopolymeren zusätzlich die Gefahr, daß die Ablösekräfte nach UV-Exposition derart stark ansteigen, daß ein rückstands- und zerstörungsfreies Wiederablösen der Klebestreifen unmöglich ist und der Klebestreifen beim Ablöseprozeß reißt.

Ein weiterer Nachteil stripfähiger Selbstklebebänder mit Haftklebemassen auf Basis von Styrolblockcopolymeren ist die Notwendigkeit der Abmischung der Styrolblockcopolymere mit niedermolekularen und damit migrierfähigen Abmischkomponenten zur Einstellung der gewünschten Haftklebeeigenschaften. Gerade bei Verklebung auf empfindlichen Untergründen kann es durch Migration von Bestandteilen der Klebharze oder durch Wanderung von Plastifizierungsmittel zu irreversiblen Veränderungen der Verklebungsuntergründe kommen, z. B. zum Durchfetten oder zu Verfärbungen auf mit weißer Dispersionsfarbe gestrichenem Tapetenuntergrund. Verfärbungen können u. a. auch durch den Einsatz von Antioxidantien oder UV-Schutzmitteln auftreten, wie sie typischerweise zur Stabilisierung entsprechender Haftklebemassen bzw. bereits deren Rohstoffe eingesetzt werden.

Acrylatcopolymere verfügen u. a. infolge ihres gesättigten Polymerrückgrates über eine ausgezeichnete Alterungsbeständigkeit sowohl gegenüber ultravioletter Strahlung wie auch gegenüber thermooxidativer Alterung. Gleichzeitig können die Haftklebeeigenschaften sowie spezifische Eigenschaftsmerkmale z. B. über die Comonomerzusammensetzung, über Art und Höhe der Vernetzung sowie ebenfalls durch die optionale Zugabe von Klebharzen in sehr großer Breite gesteuert werden. Ihr erfolgreicher Einsatz in stripfähigen Selbstklebebändern ist daher besonders attraktiv.

Die Verwendung von Polyacrylathaftklebemassen für stripfähige Selbstklebebänder ist u. a. in WO 92/11332 A1, WO 92/11333 A1, WO 95/06691 A1 und DE 195 31 696 A1 beschrieben. Die dort aufgeführten Haftklebemassen bestehen aber aus statistischen Acrylatcopolymeren, die für sich genommen keine den Anforderungen genügende hohe Kohäsion bieten. Daher enthalten Klebstreifen auf Basis dieser Klebmassen immer hochdehnfähige, hochreißfeste Zwischenträger.

WO 92/11332 A1 beschreibt folienzwischenträgerhaltige stripfähige Selbstklebebänder, welche photopolymerisierte Acrylathaftklebstoffe verwenden. Entsprechende Polyacrylathaftklebemassen bzw. deren Herstellungsverfahren verleihen derartigen Produkten jedoch spezielle Nachteile, die sich in der Praxis recht störend auswirken. Die Reaktionswärme, die während einer flächigen UV-Polymerisation von Acrylaten frei wird, kann den Träger schädigen oder verweilen. Dies gilt insbesondere für doppelseitige Klebebänder. Ein Compoundieren mit z. B. Klebharzen ist nur sehr eingeschränkt möglich, da diese die UV-Polymerisation stören. Nachteilig ist auch das zwangsläufig erhaltene Vernetzungsprofil der Klebemasse: Üblicherweise wird die UV-Polymerisation durch masseseitige UV-Bestrahlung durchgeführt. Dadurch erhält man Klebstoffschichten mit einer höheren Vernetzung an der Klebemasseoberfläche als zum Träger hin. Folge ist ein verringerter Tack und eine schlechte Masseverankerung. Wenn durch den Träger mit ultraviolettem Licht bestrahlt wird, was sowohl einen besseren Tack, bessere Adhäsion und Masseverankerung bewirkt, muß der Träger UV-durchlässig sein. Viele Träger sind aber nicht besonders gut UV-durchlässig oder werden durch UV-Licht geschädigt. Insgesamt sind die Produkteigenschaften damit derart, daß ein längeres Verkleben in gleichbleibender Qualität nicht gewährleistet ist, wie dies in WO 92/11332 A1 auf S. 19, Tabelle 2, Spalte 6 auch belegt wird, indem Masserückstände an den Verklebungsrändern verbleiben (Fußnote a), wenn die Produkte nicht ohnehin reißen (Fußnote b).

WO 92/11333 A1, WO 95/06691 A1 und DE 195 31 696 A1 beschreiben stripfähige Selbstklebebänder, welche eine breite Kombination klassischer haftklebriger Acrylatcopolymere nutzen. Beschrieben sind u. a. strahlenchemisch vernetzbare Acrylatcopolymere oder solche, welche z. B. thermisch initiierte Vernetzungsmechanismen nutzen. Nachteil sämtlicher aufgeführter Beispiele ist die Notwendigkeit einer chemischen oder strahlenchemischen Vernetzung zur Erzeugung einer ausreichenden Kohäsion der Haftklebemassen. Trotz Vernetzung zeigen entsprechende Acrylathaftklebemassen jedoch eine für ein stripfähiges Selbstklebeband sehr nachteilige Zug/Dehnungs-Charakteristik, mithin geringe Zugfestigkeiten, mit entsprechenden Nachteilen für einen reißerfreien Ablöseprozeß, welches den zwingenden Einsatz einer Trägerschicht bedingt. Ein weiterer Nachteil ist eine merkliche permanente Deformation der aufgeführten Haftklebemassen bei hohen Verstreckungen, also ein Fließen der Haftklebeschicht bei hohen Deformationen. Entsprechende hohe Deformationen treten aber zwangsweise beim Ablöseprozeß durch dehnendes Verstrecken auf. Vorgenannte Zug/Dehnungs-Charakteristik entsprechender Haftklebemassen mag die wesentliche Ursache für den bei Acrylatmassen beobachteten geringen Tackverlust bei Verstreckung sowie ebenfalls für im Vergleich zu styrolblockcopolymerhaltigen Haftklebemassen hohen Ablösekräften (Stripkräften) sein, da entsprechend mehr der im Ablöseprozeß verbrauchten Energie irreversibel in der Klebemasse dissipiert wird.

Acrylathaltige Polymere, die durch UV-induzierte Polymerisation erhalten werden (siehe z. B. WO 92/11332 A1) oder die mittels UV-Strahlung vernetzt werden (siehe z. B. UVacResin®, BASF®), können typischerweise nicht zu Schichten dicker als 100 $\mu$m verarbeitet werden, da dann die Intensität der penetrierenden UV-Strahlung für die Vernetzung nicht mehr ausreicht.

Ein generell entscheidender Nachteil für den Einsatz von Acrylatcopolymeren als stripfähige Selbstklebebänder ist deren spezifische Zug/Dehnungs-Charakteristik, welche typischerweise durch geringe Zugfestigkeiten gekennzeichnet ist. Insbesondere bei hohen Verstreckungen wird üblicherweise ein deutlich geringeres Rückstellvermögen im Vergleich zu styrolblockcopolymerbasierenden Haftklebemassen nachgewiesen. Gleichzeitig beobachtet man beim Verstrecken entsprechender acrylatcopolymerbasierender Haftklebemassen einen merklich geringeren Tackverlust im Vergleich zu styrolblockcopolymerbasierenden Haftklebemassen (siehe Beispiele).

Ein entsprechend geringerer Tackverlust verschlechtert aber die Ablöseeigenschaften erfahrungsgemäß signifikant. Dies gilt insbesondere für doppelseitig haftklebrige Selbstklebebänder: Beim Ablöseprozeß läßt es sich in der Praxis kaum vermeiden, daß der aus der Klebfuge herauszulösende Klebestreifen mit einer der Substratoberflächen in Kontakt kommt. Verkleben aber entsprechende doppelseitige Selbstklebestreifen infolge ihrer auch im gedehnten Zustand hohen Anfaßklebrigkeit beim Herauslösen aus der Klebfuge mit einem der Substratuntergründe im gedehnten Zustand, so lassen sie sich in vielen Fällen nicht mehr aus der Klebfuge herauslösen, sondern reißen beim Versuch einer weiteren Verstreckung. Desgleichen zeigen Selbstklebestreifen, welche beim Verstrecken nur einen geringen Tackverlust aufweisen, hohe Reibungskräfte beim Kontakt mit ihren Substratoberflächen, was zu Einrissen in der Klebmasseoberfläche und nachfolgend zum Reißen der Selbstklebestreifen führen kann.

Stripfähige Selbstklebebänder mit Haftklebemassen auf Basis von Acrylatcopolymeren sind infolge ihrer hohen Alterungsbeständigkeit und der Möglichkeit, ohne migrierfähige niedermolekulare Klebmassebestandteile auszukommen, insbesondere für den Einsatz in wiederverwendbaren stripfähigen Selbstklebestreifen interessant. DE 195 31 696 A1 beschreibt stripfähige Klebestreifen, die einen elastischen Kern aus Styrolblockcopolymeren enthalten, auf die beidseitig haftklebrige acrylathaltige Deckschichten laminiert wurden. Es zeigt sich allerdings, daß für solche Systeme der Tackverlust unter Verstreckung zu gering ist, um stripfähige Selbstklebestreifen zu erhalten, die rückstands- und zerstörungsfrei vom Untergrund abgelöst werden können. Dabei ist es nicht entscheidend, ob die acrylathaltige Deckschicht unvernetzt oder chemisch vernetzt ist, da sich die Zug/Dehnungs-Charakteristik der Deckschicht in beiden Fällen ungünstig von der der Mittelschicht unterscheidet.

Die Alterungsbeständigkeit sowie die hohe Resistenz gegen Wasser sind dagegen die klassischen Vorteile von Haftklebemassen auf Acrylatbasis. Durch die gezielte Copolymerisation mit unterschiedlichen Acrylaten lassen sich Haftklebebänder mit einer hohen Klebkraft herstellen. Ohne Vernetzung ist aber die Kohäsion solcher Klebemassen zu gering. Daher werden Polyacrylate chemisch vernetzt, um eine gewisse Mindestkohäsion zu gewährleisten (WO 92/11332 A1).

Durch die Umstellung auf Hotmelt-Verfahren, die u. a. deswegen zur Produktion von Haftklebemassen verwendet werden, weil mit Hilfe entsprechender Prozesse hohe Schichtdicken realisiert werden können, werden einige

der bisher angewandten Vernetzungsmechanismen für Polyacrylathaftklebemassen überflüssig. So können z.B. thermische Vernetzungsverfahren mit Metallchelaten oder multifunktionellen Isocyanaten, die sehr populär bei den Lösungsmittelsystemen sind, nicht mehr angewendet werden. Daher forciert man zur Zeit die Vernetzung von Polyacrylathaftklebemassen durch Bestrahlung mit ultraviolettem Licht (UV) oder mit Elektronenstrahlen (ES), letztere ist die sogenannte Elektronenstrahlhärtung (ESH). Mit diesen beiden Vernetzungsmethoden sind aber auch Nachteile verbunden. So werden durch Elektronenstrahlen die Träger der Haftklebebänder teilweise oder komplett zerstört oder die UV-Vernetzung läßt sich nur bis zu einer Schichtdicke von 100 μm - insbesondere mit harzabgemischten Systemen - realisieren. Zudem arbeitet die ESH nur für Polymere mit hoher mittlerer Molmasse effizient und ohne Verlust der Anfaßklebrigkeit.

In eleganter Weise kombinieren acrylathaltige Blockcopolymere die vorteilhaften Eigenschaften von klassischen Acrylatcopolymeren (Alterungsbeständigkeit, wasserklare Transparenz, inhärente Haftklebrigkeit) und Styrolblockcopolymeren (thermoreversible physikalische Vernetzung, hohe Kohäsion). Verschiedene synthetische Ansätze wurden beschrieben, um entsprechende Systeme zu verwirklichen. US 5,314,962 A beschreibt einen photoinitiierten INIFERTER-Prozeß (eine additivkontrollierte radikalische Polymerisationsmethode, vgl. auch T. Otsu, Journal of Polymer Science A Polymer Chemistry, 2000, 38, 2121), US 5,264,527 A und JP 11302617 A1 beschreiben eine Herstellung über anionische Polymerisation, EP 824 110 A1 und US 6,069,205 A beschreiben auf ATRP (atom transfer radical polymerization) basierende Prozesse, EP 921 170 A1 beschreibt einen durch stabile Nitroxid-Radikale kontrollierten radikalischen Polymerisationsprozess, WO 98/01478 A1 beschreibt eine weitere kontrolliert radikalische Polymerisationsmethode (RAFT, reversible addition-fragmentation chain transfer), die hier beispielhaft genannt werden sollen (K. Matyjaszewski (Hrsg.), Controlled/Living Radical Polymerization, ACS Symposium Series 768, 2000, ACS, Washington D. C.). Teilweise wird in den genannten Arbeiten eine Anwendung von Acrylatblockcopolymeren als Elastomere für Haftklebemassen vorgeschlagen. Die für Haftklebemassen notwendige Kohäsion wird in den Acrylatblockcopolymeren durch Domänenbildung der Endblöcke erreicht, die eine deutlich oberhalb von Raumtemperatur liegende Erweichungstemperatur aufweisen. Da diese Domänenbildung aber thermoreversibel ist, können entsprechende Materialien als Hotmelts verarbeitet werden (EP 921 170 A1, WO 00/39233 A1).

In der WO 00/39233 A1 werden Blockcopolymere als Schmelzhaftkleber hergestellt, verarbeitet und Selbstklebebandprodukte daraus hergestellt. Die Erfindung umfaßt Blockcopolymere, die aus wenigstens 2 A-Blöcken und einem B-Block bestehen, wobei das Blockcopolymer mit mindestens 40 % Harz abgemischt ist. Durch diesen hohen Harzanteil wird aber die Glastemperatur des Polymers stark heraufgesetzt, so daß diese Materialien sehr hart sind, daher geringe Klebkräfte aufweisen sowie hohe Verformungskräfte z. B. beim Verstrecken erfordern und damit als stripfähige Produkte nicht geeignet sind.

Die EP 1 008 640 A offenbart Zusammensetzungen aus drucksensitivem Kleber, welche ein Polymer umfasst, das durch Quervernetzen eines Blockcopolymers über Epoxygruppen erhältlich ist. Das Blockcopolymer umfasst Styrolbasierte Blöcke sowie Acrylatpolymerblöcke.

In der EP 349 270 A werden Haftklebstoff-Zusammensetzungen dargestellt, die ebenfalls bestimmte Blockcopolymere auf Acrylatbasis sowie Klebrigmacher umfassen.

Keine der drei vorgenannten Schriften offenbart ein Lösen einer Klebeverbindung durch ein dehnendes Verstrecken im wesentlichen in der Verklebungsebene.

Die Zug/Dehnungs-Charakteristik acrylathaltiger Blockcopolymere ist ebenfalls untersucht worden (vgl. z. B. G. Holden, N. R. Legge, R. Quirk, H. E. Schroeder (Hrsg.), Thermoplastic Elastomers, 2. Aufl., 1996, C. Hanser Verlag, München oder Macromolecules 1995, 28, 7886).

Die US 5,403,658 A offenbart eine haftklebrige Zusammensetzung, die zumindest a) ein Harz, b) ein Styrol-Isopren-Styrolblockcopolymer und c) ein weiteres Blockcopolymer aufweist, das zumindest auf einen vinylaromatischen Kohlenwasserstoff, ein konjugiertes Diolefin und mindestens ein acrylisches Monomer basiert, wobei das acrylische Monomer sich am Ende des Copolymers befinden soll und an das konjugierte Diolefin gebunden ist. Blockcopolymere mit acrylischem Mittelblock sind nicht beschrieben.

Es wurden aber bislang kein Verlust der Anfaßklebrigkeit unter Verstreckung für acrylatblockcopolymerhaltige Haftklebemassen beschrieben, wenn als Haftklebemasse oder Haftklebemassebestandteil in stripfähigen Selbstklebestreifen acrylathaltige Blockcopolymere verarbeitet werden.

Aufgabe dieser Erfindung ist es daher, verbesserte stripfähige Systeme zur Verfügung zu stellen, die die Nachteile des Standes der Technik nicht oder nur in verminderter Weise aufzeigen, die insbesondere eine hohe Stabilität gegen Einwirkung von Licht insbesondere UV-Strahlung, thermooxidativen Abbau und Ozonolyse zeigen, deutliche Tackverluste unter Verstreckung aufweisen und damit einen sicheren Ablöseprozeß durch dehnendes Verstrecken garantieren.

Überraschenderweise und für den Fachmann nicht vorhersehbar wird die Aufgabe gelöst durch die Verwendung von Haftklebemassen auf Basis von zumindest einem Blockcopolymer in stripfähigen Systemen, wie es sie im Hauptanspruch sowie in den Unteransprüchen dargestellt ist. Diese stripfähigen Systeme zeichnen sich dadurch aus, daß sie auf eine Haftklebemasse auf Basis von Acrylatblockcopolymeren beruhen, welche die oben genannten Vorgaben erfüllt und sich insbesondere durch die folgenden Kriterien auszeichnet:

- Nutzungsmöglichkeit einer großen Anzahl von Monomeren für die Synthese der Haftklebemasse, so daß eine breite Palette von Haftklebeeigenschaften durch die chemische Zusammensetzung eingestellt werden kann,
- vielfache Wiederverwendbarkeit der stripfähigen Systeme,
- niedrige Spannungswerte im Bereich mittlerer Dehnungen von ca. 200 % bis 400 % und damit ein leichtes Wiederablösen durch dehnendes Verstrecken in der Verklebungsebene,
- Ermöglichung der Herstellung dicker, hoch kohäsiver Haftklebemasseschichten, wie sie u. a. für die Herstellung einschichtiger stripfähiger Selbstklebebänder notwendig sind,
- Wahlmöglichkeit bei Einsatz der Comonomere, welche eine Steuerung der thermischen Stabilität ermöglicht, insbesondere auch eine anhaltend gute Kohäsion und damit Halteleistung bei hohen Temperaturen (> +60 °C).

Die erfindungsgemäß gestalteten derartigen stripfähigen Systeme auf Basis von acrylatblockcopolymerhaltigen Haftklebemassen weisen einen für rückstands- und zerstörungsfreies Ablösen essentiellen Tackverlust unter Verstreckung überraschend auf. Unter Verwendung der im folgenden beschriebenen acrylathaltigen Blockcopolymere als Basis für derartige stripfähige Systeme konnten Selbstklebebänder hergestellt werden, die durch Verstrecken parallel zur Verklebungsfläche rückstands- und zerstörungsfrei wieder abgelöst werden können.

Als stripfähige Systeme werden hier und im folgenden einseitig oder doppelseitig haftklebrige Selbstklebefolien und -streifen, welche zur Fixierung auf einem Material oder zur Fixierung zweier Materialien miteinander verwendet werden und bei welchen die Verklebung durch dehnendes Verstrecken des Selbstklebestreifens im wesentlichen in seiner Verklebungsebene rückstands- und zerstörungsfrei wiederabgelöst werden können.

Der Hauptanspruch betrifft dementsprechend die Verwendung von Haftklebemassen auf Basis von zumindest einem Blockcopolymer in stripfähigen Systemen zur rückstands- und zerstörungsfrei wiederlösbaren Verklebung auf einem Material oder zur rückstands- und zerstörungsfrei wiederlösbaren Verklebung zweier Materialien miteinander.

Das zumindest eine Blockcopolymer basiert zumindest teilweise auf (Meth-)Acrylsäurederivaten, wobei die Blockcopolymere mindestens die Einheit P(A)-P(B)-P(A) aus wenigstens einem Polymerblock P(B) und wenigstens zwei räumlich voneinander getrennten Polymerblöcken P(A) aufweisen, und wobei

- P(A) unabhängig voneinander Homo- oder Copolymerblöcke aus Monomeren A repräsentieren, wobei die Polymerblöcke P(A) jeweils eine Erweichungstemperatur im Bereich von + 20 °C bis + 175 °C aufweisen,
- P(B) einen Homo- oder Copolymerblock aus Monomeren B repräsentiert, wobei der Polymerblock P(B) eine Erweichungstemperatur im Bereich von - 100 °C bis + 10 °C aufweist,
- und die Polymerblöcke P(A) und P(B) nicht homogen miteinander mischbar sind Im folgenden werden die Polymerblöcke P(A) auch als "Hartblöcke" und die Polymerblöcke P(B) als "Elastomerblöcke" bezeichnet.

Unter Erweichungstemperatur wird in diesem Zusammenhang bei amorphen Systemen die Glasübergangstemperatur und bei semikristallinen Polymeren die Schmelztemperatur verstanden. Glastemperaturen werden als Ergebnisse aus quasistatischen Verfahren wie z. B. Differential Scanning Calorimetry (DSC) angegeben.

Die für die erfindungsgemäß gestalteten stripfähigen Systeme eingesetzten Blockcopolymere zeichnen sich also dadurch aus, daß zwei räumlich getrennte Polymerblöcke P(A) vorliegen, wobei die räumliche Trennung durch einen Polymerblock P(B) bewirkt wird, die Blockcopolymere müssen für die Ausbildung einer physikalischen Vernetzung also die Blocksequenz P(A)-P(B)-P(A) enthalten. Durch die Initiierung der Synthesereaktion, deren Durchführung oder andere Prozesse können Startermoleküle oder weitere artfremde molekulare Anteile in die Blocksequenz P(A)-P(B)-P(A) eingebaut sein (oder sich auch an den Enden der Copolymerblöcke befinden). In sofern stellt die hier gewählte Schreibweise eine vereinfachte Form dar.

Es ist für die erfindungsgemäß gestalteten stripfähigen Systeme von besonderem Vorteil, wenn die Haftklebemasse eine Reißdehnung von mindestens 300 % und eine Zugfestigkeit von mindestens 3 MPa aufweist. Die Messung dieser Werte erfolgt dabei nach den im experimentellen Teil angegebenen Prüfungsmethoden B.

Die Blockcopolymere für die erfindungsgemäß verwendete Haftklebemasse lassen sich entsprechend dem vorstehend gesagten in unterschiedlichsten Strukturen herstellen und vorteilhaft einsetzen. So sei explizit verwiesen auf lineare oder verzweigte Ketten aus den Polymerblöcken P(A) und P(B) oder auf sternförmige Blockcopolymere, welche mindestens zwei räumlich getrennte Polymerblöcke P(A) entsprechend der obigen Ausführungen enthalten.

Der Aufbau des Blockcopolymers/der Blockcopolymere kann durch eine oder mehrere der folgenden allgemeinen Formeln beschrieben werden:

P(A)-P(B)-P(A) (I)

P(B)-P(A)-P(B)-P(A)-P(B) (II)

$[P(A)-P(B)]_nX$ (III)

$$[P(B)\text{-}P(A)\text{-}P(B)]_nX \qquad (IV)$$

$$[P(A)\text{-}P(B)]_nX[P(B)]_m \qquad (V),$$

- wobei n größer oder gleich 2 (bevorzugt n = 2 bis 12), m > 0 (bevorzugt m = 1 bis 12) und X eine multifunktionelle Verzweigungseinheit darstellt, also ein chemisches Bauelement, über das verschiedene Polymerarme miteinander verknüpft sind,
- wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen,
- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von -100°C bis + 10 °C aufweisen.

Die multifunktionelle Verzweigungseinheit X kann dabei eine einfache Bindung darstellen [so entspricht die Verbindung (III) mit X als kovalenter Bindung und n = 2 der Verbindung P(A)-P(B)-P(A) (I)]. Die Verbindung (II) ergibt sich entsprechend aus (IV) mit X als kovalenter Bindung und n = 2.

Vorteilhaft läßt sich ebenfalls das Blockcopolymer entsprechend P(B)-P(A)-P(B)-P(A) einsetzen.

Bei den Polymerblöcken P(A), wie sie im Hauptanspruch oder in den vorteilhaften Ausführungsformen beschrieben sind, kann es sich um Polymerketten einer einzigen Monomersorte aus der Gruppe A oder um Copolymere aus Monomeren verschiedener Strukturen aus der Gruppe A handeln. Insbesondere können die eingesetzten Monomere A in ihrer chemischen Struktur und/oder in der Länge des Alkylrests variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe A. Das entsprechende gilt für die Polymerblöcke P(B) bezüglich der Monomere aus der Gruppe B.

Die Einheit P(A)-P(B)-P(A) kann sowohl symmetrisch [entsprechend $P^1(A)$-P(B)-$P^2(A)$ mit $P^1(A) = P^2(A)$] als auch unsymmetrisch [etwa entsprechend der Formel $P^3(A)$-P(B)-$P^4(A)$ mit $P^3(A) \neq P^4(A)$, wobei aber sowohl $P^3(A)$ als auch $P^4(A)$ jeweils Polymerblöcke im Sinne der Definition für P(A) seien] aufgebaut sein.

Eine vorteilhafte Ausführung ist es, wenn die Blockcopolymere einen symmetrischen Aufbau derart aufweisen, daß in der Kettenlänge und/oder der chemischen Struktur identische Polymerblöcke P(A) und/oder daß in der Kettenlänge und/oder der chemischen Struktur identische Polymerblöcke P(B) vorliegen.

Ferner seien aber auch alle "unsymmetrischen" Strukturen eingeschlossen, bei denen alle der auftretenden Polymerblöcke P(A) und P(B) für sich die obengenannten Kriterien erfüllen, nicht aber die chemische oder strukturelle Identität der einzelnen Bausteine bedingt ist.

Als Monomere für den Elastomerblock P(B) werden vorteilhaft Acrylmonomere eingesetzt. Hierfür sind prinzipiell alle dem Fachmann geläufigen Acrylverbindungen, welche sich zur Synthese von Polymeren eignen, einsetzbar. Bevorzugt werden solche Monomere gewählt, welche Glasübergangstemperaturen des Polymerblocks P(B) auch in Kombination mit einem oder mehreren weiteren Monomeren von kleiner +10 °C bedingen.
Entsprechend können bevorzugt die Vinylmonomere gewählt werden.

Für die Präparation der Polymerblöcke P(B) werden zu 75 bis 100 Gew.-% Acrylsäure- und/oder Methacrylsäurederivate der allgemeinen Struktur

$$CH_2{=}C(R^1)(COOR^2) \qquad (VI)$$

eingesetzt, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
und zu 0 bis 25 Gew.-% Vinylverbindungen (VII), welche günstigenfalls funktionelle Gruppen enthalten.

Acrylmonomere, die sehr bevorzugt im Sinne der Verbindung (VI) als Komponenten für Polymerblöcke P(B) eingesetzt werden, umfassen Acryl- und Methacrylsäurealkylester mit Alkylgruppen bestehend aus 4 bis 9 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, deren verzweigte Isomere, wie z.B. 2-Ethylhexylacrylat und Isooctylacrylat sowie cyclische Monomere wie z.B. Cyclohexyl- oder Norbornylacrylat und Isonorbornylacrylat.

Weiterhin können optional als Monomere im Sinne der Definition (VII) für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in $\alpha$-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Außerdem können bevorzugt Macromonomere eingesetzt werden, wenn der Einbau von Polymerseitenketten gewünscht wird und sich ein graft-Prozeß zum Erreichen dieses Ziels als ungünstig erweist. Beispielhaft seien hier Homo- oder Copolymere oder Homo- oder Cooligomere genannt, die aus Monomeren der Sorte B aufgebaut sind und an mindestens einer Position - bevorzugt am Kettenende - eine polymerisierbare Einheit wie z. B. eine Methacryl-, Acryl- oder Vinylgruppe tragen. Es können aber auch andere, entsprechend funktionalisierte Polymerketten wie Polydiene zur Anwendung können.

Als besonders bevorzugte Beispiele für vinylgruppenhaltige Monomere im Sinne der Definition (VII) für den Elastomerblock P(B) eignen sich weiterhin Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

In einer bevorzugten Ausführungsform der erfindungsgemäß gestalteten stripfähigen Systeme enthält einer oder mehrere der Polymerblöcke eine oder mehrere aufgepfropfte Seitenketten. Dabei können solche Systeme sowohl durch einen *graft-from*-(Aufpolymerisation einer Seitenketten ausgehend von einem bestehenden Polymerrückgrat) als auch durch einen *graft-to*-Prozeß (Anbindung von Polymerketten an ein Polymerrückgrat über polymeranaloge Reaktionen) erhalten werden.

Insbesondere zur Herstellung solcher mit Seitenketten versehenen Blockcopolymere können als Monomere B derartig funktionalisierte Monomere eingesetzt werden, die einen *graft-from*-Prozeß zum Aufpfropfen von Seitenketten ermöglichen. Hier sind insbesondere Acryl- und Methacrylmonomere zu nennen, die als Funktionalisierung Halogene tragen oder alle anderen funktionellen Gruppen, die beispielsweise einen ATRP-Prozeß (Atom Transfer Radical Polymerization) erlauben.

Alternativ können bei der Herstellung des Polymerrückgrats Makromonomere als Comonomere zum Einsatz kommen, also Polymerketten, die mit einer polymerisierbaren Einheit funktionalisiert sind.

In einer speziellen Ausführung dieser Erfindung sind eine oder mehrere funktionelle Gruppen in die Polymerblöcke P(B) eingebaut, die eine strahlenchemische Vernetzung der Polymerblöcke insbesondere mittels UV-Bestrahlung oder durch Bestrahlung mit schnellen Elektronen erlauben. Als Monomereinheiten können mit dieser Zielsetzung insbesondere Acrylester genutzt werden, welche einen ungesättigten Alkylrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) auch Vinylverbindungen mit während der (radikalischen) Polymerisation des Polymerblockes P(B) nicht reaktiven Doppelbindungen einsetzen. Besonders bevorzugte Beispiele für entsprechende Comonomere sind Isopren und/oder Butadien, aber auch Chloropren.

Ausgangsmonomere für die Polymerblöcke P(A) werden derart ausgewählt, daß die resultierenden Polymerblöcke P(A) mit den Polymerblöcken P(B) nicht mischbar sind und entsprechend Mikrophasenseparation eintritt. Vorteilhafte Beispiele für Verbindungen, welche als Monomere A eingesetzt werden, sind Vinylaromaten, Methylmethacrylat, Cyclohexylmethacrylat und Isobornylmethacrylat. Besonders bevorzugte Beispiele sind Methylmethacrylat und Styrol, wobei diese Aufzählung keinen Anspruch auf Vollständigkeit erhebt.

Weiterhin sind die Polymerblöcke P(A) aber auch als Copolymer aufgebaut das zu mindestens 75 % aus den vorstehenden Monomeren A, das zu einer hohen Erweichungstemperatur führt, oder einem Gemisch dieser Monomere bestehen kann, aber bis zu 25 % Monomere B enthält, die zu einer Erniedrigung der Erweichungstemperatur des Polymerblocks P(A) führen. In diesem Sinne sind Alkylacrylate genannt, die entsprechend der Struktur (VI) und dem hierzu gesagten definiert sind.

In einer weiteren günstigen Ausführungsform der erfindungsgemäß gestalteten stripfähigen Systeme sind Polymerblöcke P(A) und/oder P(B) derart funktionalisiert, daß eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der Blockcopolymere ist, daß ihre Molmasse $M_n$ zwischen ca. 10.000 und ca. 600.000 g/mol, bevorzugt zwischen 30.000 und 400.000 g/mol, besonders bevorzugt zwischen 50.000 g/mol und 300.000 g/mol liegt. Der Anteil der Polymerblöcke P(A) liegt vorteilhaft zwischen 5 und 40 Gewichtsprozent des gesamten Blockcopolymers, bevorzugt zwischen 7,5 und 35 Gewichtsprozent, besonders bevorzugt zwischen 10 und 30 Gewichtsprozent. Die Polydispersität des Blockcopolymers liegt bevorzugt bei kleiner 3, gegeben durch den Quotienten aus Massenmittel $M_w$ und Zahlenmittel $M_n$ der Molmassenverteilung.

Die Verhältnisse der Kettenlängen der Blockcopolymere P(A) zu denen der Blockcopolymere P(B) werden in

sehr vorteilhafter Vorgehensweise so gewählt, daß die Blockcopolymere P(A) als disperse Phase ("Domänen") in einer kontinuierlichen Matrix der Polymerblöcke P(B) vorliegen. Dies ist bevorzugt der Fall bei einem Gehalt an Polymerblöcken P(A) von kleiner als ca. 25 Gew.-%. Die Ausbildung von hexagonal gepackten zylindrischen Domänen der Polymerblöcke P(A) ist ebenfalls im Sinne der erfinderischen Lehre möglich, üblicherweise jedoch infolge der unvorteilhafteren Zug/Dehnungs-Charakteristik entsprechender Materialien sowie durch die infolge der Domänenstruktur induzierte strukturelle Anisotropie der resultierenden Haftklebemassen nicht so sehr zu bevorzugen. Über eine asymmetrische Gestaltung der Triblockcopolymere, wobei in linearen Systemen die Blocklängen der endständigen Polymerblöcke P(A) unterschiedlich sind, kann der Gehalt an Polymerblöcken P(A), bei welcher das System noch eine Kugelmorphologie ausbildet, auf oberhalb ca. 30 Gew.-% gesteigert werden. Dies ist besonders zu bevorzugen, wenn eine Erhöhung der inneren Festigkeit der Haftklebemasse nötig ist, sowie zur Verbesserung der mechanischen Eigenschaften.

Weiterhin hat es sich im erfinderischen Sinne als vorteilhaft herausgestellt, wenn Blends der obengenannten Blockcopolymere, enthaltend wenigstens eine Einheit P(A)-P(B)-P(A) mit Blockcopolymeren, welche keine zwei durch einen Block P(B) getrennten Polymerblöcke P(A) enthalten, zum Beispiel mit den invers aufgebauten Blockcopolymeren P(B)-P(A)-P(B), $[P(B)-P(A)]_nX$ und/oder $[P(B)-P(A)]_nX[P(B)]_m$, eingesetzt werden.

Als Blendkomponenten eignen sich insbesondere die Diblockcopolymere P(A)-P(B), wobei in den vorgenannten Fällen zur Herstellung der entsprechenden Polymerblöcke P(A) und P(B) die gleichen Monomere wie oben genutzt werden können. Außerdem kann es von Vorteil sein, den vorgenannten Blockcopolymergemischen zur Verbesserung ihrer Eigenschaften Polymere P'(A) und/oder P'(B) zuzusetzen. Dementsprechend stellen diejenigen Systeme eine Weiterentwicklung der stripfähigen Systeme dar, bei denen die Haftklebemasse ein Blend eines oder mehrerer Blockcopolymere mit zumindest einem Blockcopolymer, welches die invers aufgebaute Einheit P(B)-P(A)-P(B) enthält, und/oder mit einem oder mehrerer Diblockcopolymere P(A)-P(B) darstellt,

- wobei die Polymerblöcke P(A) (der einzelnen inversen Blockcopolymere beziehungsweise der Diblockcopolymere) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen,
- und wobei die Polymerblöcke P(B) (der einzelnen inversen Blockcopolymere beziehungsweise der Diblockcopolymere) unabhängig voneinander Homo- oder Copolymerblöcke aus den Monomeren B repräsentieren, wobei die Polymerblöcke P(B) jeweils eine Erweichungstemperatur im Bereich von -100°C bis + 10 °C aufweisen,

und/oder mit Polymeren P'(A) und/oder P'(B),

- wobei die Polymere P'(A) Homo- und/oder Copolymere aus den Monomeren A repräsentieren, wobei die Polymere P'(A) jeweils eine Erweichungstemperatur im Bereich von + 20 °C bis + 175 °C aufweisen,
- wobei die Polymere P'(B) Homo- und/oder Copolymere aus den Monomeren B repräsentieren, wobei die Polymere P'(B) jeweils eine Erweichungstemperatur im Bereich von - 100 °C bis + 10 °C aufweisen,
- und wobei die Polymere P'(A) beziehungsweise P'(B) bevorzugt mit den Polymerblöcken P(A) beziehungsweise P(B) mischbar sind,

darstellt.

Sofern sowohl Polymere P'(A) und Polymere P'(B) zugemischt sind, werden diese vorteilhaft derart gewählt, daß die Polymere P'(A) und P'(B) nicht homogen miteinander mischbar sind.

Als Monomere für die inversen Blockcopolymere, die Diblockcopolymere P(A)-P(B) beziehungsweise für die Polymere P'(A) und P'(B) werden bevorzugt die bereits genannten Monomere der Gruppen A und B eingesetzt.

Die Diblockcopolymere weisen bevorzugt eine Molmasse $M_n$ zwischen 5.000 und 600.000 g/mol, mehr bevorzugt zwischen 15.000 und 400.000 g/mol, besonders bevorzugt zwischen 30.000 und 300.000 g/mol auf. Sie besitzen vorteilhaft eine Polydispersität $D = M_w/M_n$ von nicht mehr als 3. Es ist günstig, wenn der Anteil der Polymerblöcke P(A) in Bezug auf die Zusammensetzung des Diblockcopolymers zwischen 3 und 50 Gew.-%, bevorzugt zwischen 5 und 35 Gew.-% liegt.

Typische Einsatzkonzentration von inversen Blockcopolymeren und/oder Diblockcopolymeren im Blend betragen bis zu 250 Gewichts-Teile auf 100 Gewichtsteile Blockcopolymere enthaltend die Einheit P(A)-P(B)-P(A). Die Polymere P'(A) beziehungsweise P'(B) können als Homo- und auch als Copolymere aufgebaut sein. Sie werden entsprechend dem oben gesagten vorteilhaft derart gewählt, daß sie mit den Blockcopolymeren P(A) beziehungsweise P(B) verträglich sind. Die Kettenlänge der Polymere P'(A) beziehungsweise P'(B) ist in bevorzugter Weise derart gewählt, daß sie die des mit ihr bevorzugt mischbaren bzw. assoziierbaren Polymerblocks nicht übersteigt, vorteilhaft 10 % niedriger, sehr vorteilhaft 20 % niedriger ist als diese.

In einer vorteilhaften Vorgehensweise enthalten auch die Polymerblöcke P(B) der inversen Blockcopolymere, der Diblockcopolymere und/oder die Polymere P'(B) zumindest teilweise eine oder mehrere aufgepfropfte Seitenketten. Auch hier lassen sich *graft-from-* und *graft-to-*Prozesse zur Präparation nutzen. Das entsprechend oben hierzu gesagte

gilt ebenfalls.

Derart modifizierte inversen Blockcopolymere, Diblockcopolymere P(A)-P(B) beziehungsweise Polymere P'(B) eignen sich insbesondere in den Fällen zur Einbringung von aufgepfropften Seitenketten in das Haftklebesystem, wenn die die Einheit P(A)-P(B)-P(A) enthaltenden Copolymerblöcke nicht direkt mit Seitenketten versehen werden können.

Zur Herstellung der Blockcopolymere für die erfindungsgemäß gestalteten stripfähigen Systeme können prinzipiell alle kontrolliert oder lebend verlaufenden Polymerisationen eingesetzt werden, ebenso auch Kombinationen verschiedener kontrollierter Polymerisationsverfahren. Hierbei seien z. B., ohne den Anspruch auf Vollständigkeit zu besitzen, neben der anionischen Polymerisation die ATRP, die Nitroxid/TEMPOkontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlaubt.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 6 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wäßrigen Medien beziehungsweise Gemischen aus organischen und wäßrigen Lösungsmitteln werden zur Polymerisation bevorzugt Emulgatoren und Stabilisatoren zugesetzt. Als Polymerisationsinitiatoren werden vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide des Typs (VIIIa) oder (VIIIb) eingesetzt:

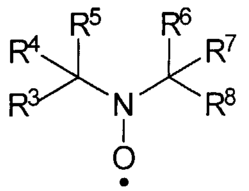

(VIIIa)

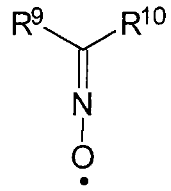

(VIIIb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$, wobei $R^{11}$, $R^{12}$ oder $R^{13}$ für Reste aus der Gruppe ii) stehen.

Verbindungen der (VIIIa) oder (VIIIb) können auch an Polymerketten jeglicher Art gebunden sein (vorrangig in dem Sinne, daß zumindest einer der oben genannten Reste eine derartige Polymerkette darstellt) und somit zum Aufbau der Blockcopolymere als Makroradikale oder Makroregler genutzt werden.

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid

- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

US 4,581,429 A offenbart ein kontrolliert radikalisches Polymerisationsverfahren, das als Initiator eine Verbindung der Formel $R^IR^{II}N$-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Weiterhin vorteilhaft kann das erfindungsgemäß eingesetzte Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird im allgemeinen durch die Struktur $P_L(A)$-Me repräsentiert, wobei Me ein Metall der Gruppe I des Periodensystems, wie z.B. Lithium, Natrium oder Kalium, und $P_L(A)$ ein wachsender Polymerblock aus den Monomeren A. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und sowie nachfolgend durch erneute Zugabe von Monomeren A ein weiterer Polymerblock P(A) anpolymerisiert, so daß ein Triblockcopolymer P(A)-P(B)-P(A) entsteht. Alternativ kann P(A)-P(B)-M durch eine geeignete difunktionelle Verbindung gekuppelt werden. Auf diesem Weg sind auch Sternblockcopolymere $[(P(B)-P(A))_n]X$ zugänglich. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur $R^{III}$-S-C(S)-S-$R^{III}$ (Macromolecules 2000, 33, 243-245), mittels derer in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden. In einer sehr vorteilhaften Variante werden beispielsweise die Trithiocarbonate (IX) und (XI) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann. Der Phenylring Φ kann optional einen oder mehrere Polymerblöcke, beispielsweise Polybutadien, Polyisopren, Polychloropren oder Poly(meth)acrylat, das entsprechend der Definition für P(A) oder P(B) aufgebaut sein kann, oder Polystyrol tragen, um nur

einige zu nennen. Funktionalisierungen können beispielsweise Halogene, Hydroxygruppen, Epoxidgruppen, stickstoff- oder schwefelenthaltende Gruppen sein, ohne daß diese Liste Anspruch auf Vollständigkeit erhebt.

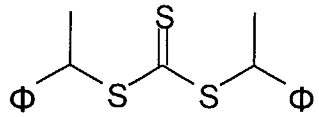

(IX)

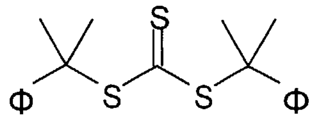

(X)

Außerdem können Thioester der allgemeinen Struktur $R^{IV}$-C(S)-S-$R^{V}$ zum Einsatz kommen, insbesondere, um asymmetrische Systeme herzustellen. Dabei können $R^{IV}$ und $R^{V}$ unabhängig von einander gewählt werden und $R^{IV}$ ein Rest aus einer der folgenden Gruppen i) bis iv) und $R^{V}$ ein Rest aus einer der folgenden Gruppen i) bis iii) sein kann:

i) $C_1$- bis $C_{18}$-Alkyl, $C_2$- bis $C_{18}$ Alkenyl, $C_2$- bis $C_{18}$-Alkinyl, jeweils linear oder verzweigt; Aryl-, Phenyl-, Benzyl-, aliphatische und aromatische Heterozyklen.
ii) -$NH_2$, -NH-$R^{VI}$, -$NR^{VI}R^{VII}$, -NH-C(O)-$R^{VI}$, -$NR^{VI}$-C(O)-$R^{VII}$, -NH-C(S)-$R^{VI}$, -$NR^{VI}$-C(S)-$R^{VII}$,

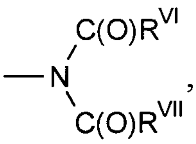 , 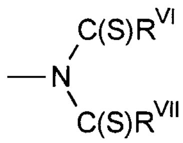 , 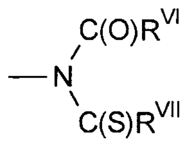

wobei $R^{VI}$ und $R^{VII}$ unabhängig voneinander gewählte Reste aus der Gruppe i) sind.
iii) -S-$R^{VIII}$, -S-C(S)-$R^{VIII}$, wobei $R^{VIII}$ ein Rest aus einer der Gruppen i) oder ii) sein kann.
iv) -O-$R^{VIII}$, -O-C(O)-$R^{VIII}$, wobei $R^{VIII}$ ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Auslegung die Polymerisation mehrfach initiiert. Diese Neuerung ist Teil der vorliegenden Anmeldung.

Erfindungsgemäß wird das Lösemittel daher bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Übliche Mengen an Blockcopolymeren oder deren Mischungen (Blends) in der Haftklebemasse können beispielsweise mehr als 25 Gew-%, bevorzugt mehr als 50 Gew.-%, bezpogen auf das Gewicht der Haftklebemasse, betragen. Das Mischungsverhältnis mit weiteren Komponenten wird entsprechend der gewünschten Eigenschaften gewählt.

Zur vorteilhaften Weiterentwicklung können den blockcopolymerhaltigen Haftklebemassen Klebharze beigemischt werden. Prinzipiell lassen sich alle in dem entsprechenden Polyacrylatmittelblock P(B) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze,

Alkylphenolharze, aliphatische, aromatische und aliphatisch-aromatische Kohlenwasserstoffharze, um nur einige zu nennen. Vorrangig werden solche Harze gewählt, die vorzugsweise mit dem Elastomerblock verträglich sind. Der Gewichtsanteil der Harze an der Haftklebemasse beträgt typischerweise bis zu 40 Gew. %, mehr bevorzugt bis zu 30 Gew. %. Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Haftklebemasse durch die physikalische Vernetzung der Polymerblöcke P(A) erzeugt. Die so erhaltene physikalische Vernetzung ist typischerweise thermoreversibel. Für eine nichtreversible Vernetzung können die Haftklebemassen zusätzlich chemisch vernetzt werden. Hierzu können die acrylatblockcopolymerhaltigen Haftklebemassen, welche für die erfindungsgemäß gestalteten stripfähigen Systeme eingesetzt werden, optional verträgliche Vernetzersubstanzen enthalten. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Zur optionalen Vernetzung mit UV-Licht werden den polyacrylathaltigen Blockcopolymeren, welche in den erfindungsgemäß gestalteten Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren, unter anderem vom Typ Norrish I oder Norrish II, können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die erfindungsgemäß eingesetzten Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

**Selbstklebebänder (Produktaufbauten)**

Die stripfähigen Systeme können insbesondere aufgebaut sein aus:

a] einschichtigen Klebstofffolien bestehend aus einer Haftklebeschicht, welche als Basispolymer ein oder mehrere Acrylat-Blockcopolymere enthält.
b] mehrschichtigen Klebstofffolien, welche als Haftklebeschicht ein- oder beidseitig eine solche auf Basis von Acrylat-Blockcopolymeren nutzt.

Die Klebstofffolien können bevorzugt

- entsprechend DE 44 28 587 A1, DE 198 42 864 A1, DE 198 42 865 A1, DE 199 38 693 A1 ausgeformt sein,
- entsprechend DE 44 31 914 A1 mit zur Haftklebemasse abhäsiv ausgerüsteten nicht haftklebrigen Abdeckungen modifiziert sein,
- in Produkten entsprechend DE 43 39 604 A1 eingesetzt werden,
- mit einem Anfasser entsprechend DE 42 22 849 A1, WO 98/03601 A1, DE 196 27 400 A1 ausgestattet sein,
- in Produkten entsprechend DE 196 49 727 A1, DE 196 49 728 A1, DE 196 49 729 A1, DE 198 20 858 A1 als alleinige Haftklebemasse oder als äußere Lage in mehrschichtigen Klebstofffolien eingesetzt werden.

Die erfindungsgemäß gestalteten stripfähigen Systeme weisen vorteilhaft einen der im folgenden näher beschriebenen Produktaufbauten auf:

a) Einschichtige Produktaufbauten

Auf Grund der hohen Kohäsion der Acrylatblockcopolymere können acrylatblockcopolymerhaltige Selbstklebestreifen oder -folien aus einer Einzelschicht a (Fig. 1) mit einer Dicke von bis zu mehreren Millimetern hergestellt werden. Infolge der intrinsischen UV-Stabilität benötigen entsprechende Selbstklebestreifen/-folien keine oder nur sehr geringe Mengen an Lichtschutzmitteln. Wasserklar transparente Ausführungsformen hoher Lichtstabilität sind daher leicht zugänglich. Die Selbstklebestreifen/- folien weisen bevorzugt eine Dicke von größer 100 µm, mehr bevorzugt von größer 350 µm auf.

Die Form der Selbstklebestreifen kann beispielsweise rechteckig oder auch zum Ende der Klebestreifen hin sich verjüngend ausgestaltet sein, z. B. entsprechend DE 44 28 587 A1 und DE 198 42 865 A1, was aber andere Formen nicht ausschließt.

b) Mehrschichtaufbauten

Des weiteren können basierend auf die Acrylatblockcopolymere enthaltenden erfindungsgemäß gestalteten stripfähigen Systeme mehrschichtige Selbstklebestreifen/- folien genutzt werden, z. B. zweischichtige, dreischichtige oder auch Multischichtsysteme (siehe Fig.2: Dreischichtaufbau; Fig. 3: Zweischichtaufbau).

Die erfindungsgemäß gestalteten stripfähigen Systeme sind gleichfalls nutzbar in Form von Mehrschichtaufbauten, welche Schichten beinhalten, die keine der wie zuvor beschriebenen Acrylatblockcopolymere enthalten. Entsprechende dreischichtige Selbstklebebänder enthalten z. B. eine Mittelschicht b und zwei Deckschichten a und a' (Fig. 2). Schicht b kann beispielsweise Elastomere wie Naturkautschuk, synthetisches Polyisopren, Polybutadien oder thermoplastische Elastomere wie Styrolblockcopolymere (z. B. Styrol-Isopren-Styrol, Styrol-Butadien-Styrol bzw. deren hydrierte Analoga Styrol-Ethylen/Propylen-Styrol und Styrol-Ethylen/Butylen-Styrol) bzw. die zu vorgenannten Styrolblockcopolymeren analogen PMMA-haltigen Polymere Poly(MMA-Isopren-MMA), Poly(MMA-Butadien-MMA), Poly(MMA-Ethylen/Propylen-MMA) und Poly(MMA-Ethylen/Butylen-MMA) in reiner oder in mit Harzen und/oder anderen Additiven abgemischter Form enthalten. Die Dicke der Schicht b beträgt bevorzugt mindestens 50 µm, besonders bevorzugt mindestens 100 µm.

Die Deckschichten a und a' bestehen aus acrylatblockcopolymerhaltigen Haftklebemassen, wie sie vorstehend beschrieben sind, wobei a und a' von gleichem oder unterschiedlichem Aufbau sein kann. Acrylatblockcopolymerhaltige Deckschichten können unterschiedliche oder gleiche Dicken aufweisen und sind typischerweise mindestens 10 µm, mehr bevorzugt mindestens 25 µm dick.

Stripfähige Systeme in Form von Zweischichtsystemen bestehen aus zwei Schichten a und b (Fig. 3).

Schicht b kann beispielsweise aus Elastomeren wie z. B. Naturkautschuk oder thermoplastischen Elastomeren wie z. B. Acrylatblockcopolymeren oder Styrolblockcopolymeren mit Polydien-Mittelblöcken in reiner oder mit Harzen und/oder anderen Additiven abgemischter Form aufgebaut sein. Schicht b ist insbesondere durch eine Dicke von mindestens 10 µm gekennzeichnet, bevorzugt durch eine Dicke von nicht weniger als 25 µm, mehr bevorzugt durch eine Dicke von nicht weniger als 100 µm.

Die Deckschicht a besteht aus acrylatblockcopolymerhaltigen Haftklebmassen, wie sie vorstehend beschrieben sind. Die Deckschicht weist typischerweise eine Dicke von nicht weniger als 10 µm, mehr bevorzugt nicht weniger als 25 µm auf.

Die Form der Selbstklebestreifen kann auch hier rechteckig oder auch zum Ende der Klebestreifen hin sich verjüngend ausgestaltet sein, z. B. entsprechend DE 44 28 587 A1 und DE 198 42 865 A1, was aber andere Formen nicht ausschließt.

c) Doppelseitiges, trägerhaltiges Klebeband

Acrylatblockcopolymere erlauben außerdem den Aufbau von trägerhaltigen doppelseitigen Selbstklebebändern/-folien, die als Mittelschicht wahlweise Folienträger enthalten können, um die Kohäsion weiter zu verbessern, oder auch schaumstoffhaltige Träger, die z. B. zu einer verbesserten Anpassung der Selbstklebestreifen/-folien an rauhe Substratoberflächen führen können.

**Prüfmethoden**

**A. Tackverlust**

Es wurden Abzugskräfte an verstreckten und unverstreckten Selbstklebefilmen mit Hilfe eines Probe-Tack-Geräts (Texture Analyser TA XT2iHR der Fa. Stable Microsystems) gemessen. Dazu wurden die stripfähigen Selbstklebebänder jeweils verstreckt und unverstreckt auf ein auf einem Stahlträger fixierten doppelseitigen Klebeband verklebt, um den Verstreckungsgrad (500 %) während der Messung konstant zu halten. Zur Messung der maximalen Ablösekraft wurde ein aus poliertem Stahl bestehender Stempel mit kugelförmiger Oberfläche (Durchmesser 1,2 cm) mit einer Andruckkraft von 2 N, einer Anfahrtsgeschwindigkeit von 0,5 mm/min, einer Abzugsgeschwindigkeit von 5 mm/min und einer Kontaktzeit von 0,01 s benutzt. Erfaßt wird die maximal auftretende Kraft beim Ablöseprozess $F_{max}$. Von jedem der Muster werden zehn Messwerte an unterschiedlichen Stellen der Selbstklebestreifenoberfläche ermittelt. Der Tackverlust in % wird angegeben als $\left(1-\frac{\bar{F}_{max}\,(\text{gedehnt})}{\bar{F}_{max}\,(\text{ungedehnt})}\right)\cdot 100$. Zwischen Fingertack und der auf diese Weise gemessenen maximalen Ablösekraft existiert näherungsweise nachfolgende Korrelation:

| $F_{max}$ | Fingertack |
|---:|---:|
| 0,5 N | Sehr niedrig (--) |
| 1 N - 3 N | Niedrig (-) |
| 3 N - 6 N | Mittel (0) |
| 6 N - 8 N | Hoch (+) |
| > 8 N | Sehr hoch (++) |

**B. Zugfestigkeit, Reißdehnung, Spannungswerte**

Die Prüfung erfolgte gemäß DIN 53504 (Mai 1994) unter Verwendung der dort beschriebenen Schulterstäbe S2. Die Durchführung des Zugversuches erfolgte analog Abschnitt 6.4.1 b) mit einem Ansatzmeßsystem (nicht berührungslos), wobei aber entgegen der dort gemachten Angaben zur Aufnahme der Kraft-Längenänderungs-Kurve mit einer Vorschubgeschwindigkeit von 300 mm/min gearbeitet wurde. Die Auswertung erfolgte gemäß der Abschnitte 7.2, 7.3 und 7.4.

**C. Scherstandzeiten**

Die Prüfung erfolgte gemäß PSTC-7. Auf eine 25 µm dicke PET-Folie wird eine 50 µm dicke Haftklebeschicht aufgebracht. Ein 1,3 cm breiter Streifen dieses Musters wird auf einem polierten Stahlplättchen auf einer Länge von 2 cm mit einer 2 kg-Rolle durch dreimaliges doppeltes Überrollen verklebt. Die Plättchen werden für 30 min unter Testbedingungen (Temperatur und Luftfeuchtigkeit), aber ohne Last equilibriert. Dann wird das Testgewicht angehängt, so daß eine Scherbeanspruchung parallel zur Verklebungsfläche entsteht, und die Zeit gemessen, bis die Verklebung versagt. Ist eine Haltezeit von 10.000 min erreicht, so wird der Versuch vor Versagen der Klebbindung abgebrochen.

**D. Klebkraft**

Die Prüfung der Schälfestigkeit (Klebkraft) erfolgte gemäß PSTC-1. Auf eine 25 µm dicke PET-Folie wird eine 50 µm dicke Haftklebeschicht aufgebracht. Ein 2 cm breiter Streifen dieses Musters wird auf einer Stahlplatte durch dreimaliges doppeltes Überrollen mittels einer 2 kg Rolle verklebt. Die Stahlplatte wird eingespannt und der Selbstklebestreifen über sein freies Ende an einer Zugprüfmaschine unter einem Schälwinkel von 180° abgezogen.

**E. Stripkraft**

Zur Ermittlung der beim Ablösen durch dehnendes Verstrecken auftretenden Ablösekraft (Stripkraft) wird ein Selbstklebestreifen der Abmessungen 50 mm x 20 mm (Länge x Breite) zwischen zwei Stahlplatten (deckungsgenau zueinander angeordnet) der Abmessungen 50 mm x 30 mm durch zweimaliges doppeltes Überrollen mittels einer 2 kg-Rolle derart verklebt, daß ein ausreichender Anfasserberich für die Befestigung in den Klemmbacken eines Kraftmeßgeräts übersteht, und anschließend mit einer Kraft von 500 N für 6 Sekunden gepreßt. Die Verklebungen

werden 24 h bei + 40 °C gelagert. Die Stahlplatten tragen an ihrem unteren Ende je eine Bohrung zur Aufnahme eines S-förmigen Stahlhakens. Das untere Ende des Stahlhakens trägt eine weitere Stahlplatte, über die die Prüfanordnung zur Messung in der unteren Klemmbacke einer Zugprüfmaschine fixiert werden kann. Nach Rekonditionierung auf RT wird der Klebfolienstreifen mit einer Zuggeschwindigkeit von 1000 mm/min parallel zur Verklebungsebene herausgelöst. Dabei wird die erforderliche Ablösekraft (Stripkraft) in N/cm gemessen. Zur besseren Vergleichbarkeit mit den Maximalspannungswerten aus den Zug/Dehnungs-Experimenten werden die Ergebnisse der Stripkraftbestimmungen in Einheiten von MPa angegeben, also in Form einer Stripspannung. Die Stahlplatten werden abschließend auf vorhandene Klebmasserückstände überprüft.

**F. Thermoscherweg**

Der zu vermessende Selbstklebefilm wird derart auf einer vertikalen, temperierbaren, 1 mm starken Substratplatte aus geschliffenem V2A-Stahl fixiert, daß er etwa 3 mm über diese nach oben hinausragt. Dazu wurde er durch zweimaliges doppeltes Überrollen mittels einer 2 kg-Rolle fixiert. Die verklebte Fläche beträgt 13 mm x 10 mm (Höhe x Breite). Im verklebten Bereich wird der Filmträger mittig in etwa 6 mm Breite mit einem 100 μm starken, mit einer Haftklebemasse versehenen PETP-Träger rückseitig verstärkt. Der Verstärkungsfilm ragt etwa 1 mm nach oben über den zu vermessenden Selbstklebefilm hinaus. Zur Aufnahme der Scherwege dient eine Tauchspule (differentieller HF-Transformator), die mit ihrem Taster auf dem Hilfsträger aufliegt. Bei Anlegen einer Scherspannung, die durch Anhängen eines Gewichtes an den Selbstklebestreifen erfolgt, wird der Stift der Tauchspule entsprechend der im verklebten Bereich eintretenden Scherdeformation ausgelenkt. Dies führt innerhalb des nutzbaren Meßbereiches von 2500 μm zu einer linearen Veränderung der induzierten elektrischen Spannung in der Empfängerspule. Detektiert wird die Summe aus elastischer und viskoser Scherverformung. Die Auflösegenauigkeit der Meßapparatur liegt bei etwa 1,2 μm. Über eine Heizsteuerung wird ein Temperaturprogramm (Starttemperatur: + 30 °C; Endtemperatur: + 180 °C; Heizrate 2 K/min) gefahren. Ermittelt wird die Temperatur bei einem erreichten Scherweg von 250 μm ($T_{250\ \mu m}$) sowie die Temperatur beim Versagen der Verklebung ($T_{Bruch}$).

**G. Alterungsbeständigkeit**

Klebstreifen einer Breite von 2 cm wurden auf Glasplatten durch zweimaliges doppeltes Überrollen mittels einer 2 kg-Rolle verklebt und für 7 Tage unter einer Sonnenlichtlampe (Osram Ultra Vitalux 300 W) bestrahlt. Der Abstand zwischen Probe und Lichtquelle betrug 35 cm, die Temperatur im Bestrahlungsraum + 50 °C. Die bestrahlte Probe wurde optisch auf Verfärbung untersucht und mit einer unbestrahlten Probe verglichen. Anschließend wurde ein Klebkrafttest analog PSTC-1 (siehe auch Methode D in der vorliegenden Schrift) durchgeführt und mit einer unbestrahlten Probe verglichen. Nach Abzug der Haftklebemasse von der Glasplatte wurde die Substratoberfläche auf etwaige Klebmassenrückstände untersucht.

**Prüfmusterherstellung**

*Herstellung eines RAFT-Reglers:*

Die Herstellung des Reglers Bis-2,2'-phenylethyltrithiocarbonats (IX) erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %. $^1$H-NMR ($CDCl_3$), δ: 7,20-7,40 ppm (m, 10 H); 3,81 ppm (m, 1 H); 3,71 ppm (m, 1 H); 1,59 ppm (d, 3 H); 1,53 ppm (d, 3 H).

*Herstellung von Nitroxiden:*

(a) Herstellung des difunktionellen Alkoxyamins (XI):

Es wurde analog der Versuchsvorschrift aus Journal of American Chemical Society, 1999, 121(16), 3904 vorgegangen. Als Ausgangsstoffe wurden 1,4-Divinylbenzol und Nitroxid (XII) eingesetzt.

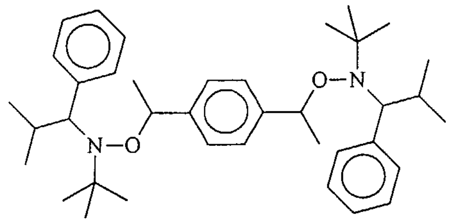

(XI)

(b) Herstellung des Nitroxids (XII) (2,2,5-Trimethyl-4-phenyl-3-azahexan-3-nitroxid):

Es wurde analog der Versuchsvorschrift aus Journal of American Chemical Society, 1999, 121(16), 3904 vorgegangen.

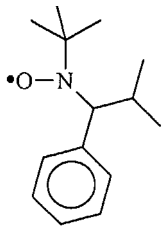

(XII)

*Verwendete kommerzielle Rohstoffe:*

| Handelsname | Struktur | Hersteller |
|---|---|---|
| Vazo 67 | 2,2'-Azobis-(2-methylbutannitril) | DuPont |
| Kraton D1102 | PS-PB-PS, 29 % Styrolgehalt, ca. 20 % PS-PB Diblockgehalt | Shell Chemicals |
| Regalite R1100 | Hydriertes C9-Klebharz | Hercules |
| Norsolene M1080 | C9-C5-Klebharz | Cray Valley |
| Dertophene T 110 | Terpenphenol-Klebharz | DRT |
| Desmodur L75 | Aromatisches Isocyanat | Bayer AG |

*Beispiel 1: Herstellung PS-P(BuA/AA)-PS:*

(i) In einem für die radikalische Polymerisation konventionellem Reaktor werden unter Stickstoffatmosphäre 362 g Styrol und 3,64 g Regler (IX) vorgelegt. Es wird auf 110 °C erhitzt und mit 0,1g Vazo 67® (DuPont) initiiert. Für 24 Stunden wird bei 110 °C gerührt, dann mit weiteren 0,1 g Vazo 67® initiiert und weitere 24 Stunden polymerisiert. Während der Polymerisation steigt die Viskosität merklich an. Zur Kompensation werden 150 g Toluol zugegeben.
(ii) In einem zweiten Schritt wird dem Produkt aus (i) 2,285 kg n-Butylacrylat (BuA), 97 g Acrylsäure (AA) und 750 g Aceton zugefügt. Es wird auf 60 °C erwärmt und mit 0,75 g Vazo 67 initiiert. Nach 3 Stunden wird nochmals mit 0,75 g Vazo 67® nachinitiiert. Nach 5 Stunden wird mit 400 g Aceton verdünnt. Nach 14 Stunden ist die Polymerisation beendet und es wird abgekühlt.

Das erhaltene Produkt wurde im Vakuumtrockenschrank bei 10 Torr und 45 °C 12 Stunden lang aufkonzentriert.

Charakterisierung: PS-P(BuA/AA)-PS; $M_n$ = 176 kg/mol; $M_w/M_n$(GPC) = 1,8; Comonomergehalte: 13 % Styrol, 4 % Acrylsäure, 83 % n-Butylacrylat; Umsatz 96 %. (Molmassenangaben aus GPC gegen Polystyrol-Standards).

*Beispiel 2: Herstellung PMMA-PBuA-PMMA:*

Allgemeine Durchführung: Eine Mischung aus dem Alkoxyamin (XI) und dem Nitroxid (XII) (10 Mol-% zu Alkoxyamin (XI)) wird mit dem Monomeren B (für den späteren Polymerblock P(B)) gemischt, mehrmals unter Herabkühlen auf - 78 °C entgast und anschließend in einem geschlossenen Behälter unter Druck auf 110 °C erhitzt. Nach 36 h Reaktionszeit wird das Monomer A (für den späteren Polymerblock P(A)) hinzugegeben und weitere 24 Stunden bei dieser Temperatur polymerisiert.

In Analogie zur allgemeinen Durchführung der Polymerisation wurden 0,739 g des difunktionellen Initiators (XI), 0.0287 g des freien Nitroxids (XII), 500 g n-Butylacrylat (B) und 105 g Methylmethacrylat (A) eingesetzt. Zur Isolierung des Polymers wurde auf Raumtemperatur abgekühlt, das Blockcopolymer PMMA-PBuA-PMMA in 750 ml Dichlormethan gelöst und dann in 6.0 L Methanol (auf -78 °C gekühlt) unter starkem Rühren gefällt. Der Niederschlag wurde über eine gekühlte Fritte abfiltriert.

Das erhaltene Produkt wurde im Vakuumtrockenschrank bei 10 Torr und 45 °C 12 Stunden lang aufkonzentriert.

Charakterisierung: PMMA-PBuA-PMMA $M_n$ = 186 kg/mol ($M_w/M_n$(GPC) = 1,7); 17 % Methylmethacrylat, 83 % n-Butylacrylat; Umsatz 94 %.

*Beispiel 3: Vergleichsprobe 1:*

Zum Vergleich wurden handelsübliche tesa® Powerstrips® untersucht, welche ein einschichtiges, auf Styrolblockcopolymer (enthaltend Blockcopolymere mit nicht hydrierten Elastomerblöcken), Klebharz und Additiven bestehendes trägerloses Selbstklebesystem darstellen (vgl. DE 42 22 849 C2).

*Beispiel 4: Vergleichsprobe 2:*

Ferner wurde ein chemisch vernetztes Acrylatcopolymer ("Vernetztes Acrylat") untersucht, das durch klassische radikalische Polymerisation hergestellt wurde. Die Zusammensetzung beträgt 48,5 % n-Butylacrylat, 48,5 % 2-Ethylhexylacrylat, 2 % Glycylidenmethycrylat, 1 % Acrylsäure, vernetzt mit Desmodur L75 und Zinkchlorid. Vergleichsprobe 2 enthielt zu 30 % das Klebharz Dertophene T110®.

*Herstellung stripfähiger Selbstklebebänder:*

(i) Einschichtsysteme wurden durch Pressen (temperierbare Presse: Typ KHL 50 der Fa. Bucher-Guyer) des lösungsmittelfreien Materials bei 180 °C unter 600 kg für 5 min und anschließend unter 6 t für 1 min sowie Ausstanzen von 20 mm x 50 mm großen Selbstklebestreifen erhalten.

(ii) Dreischichtsysteme wurden erhalten durch Ausstreichen der Haftklebeschicht a auf ein silikonisiertes Trennpapier, anschließendes Umkaschieren auf einen zuvor durch Pressen hergestellten Elastomerkern (bestehend aus 60 Tln. Kraton D 1102 und 40 Tln. Regalite R 1100) und anschließendes Ausstanzen von 20 mm x 50 mm großen Selbstklebestreifen. Die Anbindung der Deckschicht an den Kern ist so gut, daß nach Verklebung und Wiederablösung durch Verstrecken die Deckschichten auf dem Elastomerkern verbleiben und das Substrat rückstandsfrei zurückbleibt.

(iii) Trägerhaltige Systeme mit schaumstoffhaltigem Träger wurden hergestellt, indem die Deckschicht auf silikonisiertes Trennpapier ausgestrichen wurde, auf den fluorvorbehandelten Schaum umkaschiert wurde und anschließend zu 20 mm x 50 mm großen Selbstklebestreifen ausgestanzt wurden. Auf Folienträger wurde die Haftklebemasse direkt beschichtet.

**Beispiele**

Als Beispiel seien hier folgende stripfähigen Selbstklebestreifen vorgestellt:

| Bezeichnung | Produktaufbau | Schichtdicke | Materialien |
|---|---|---|---|
| Klebestreifen 1 | Einschichtig | a = 760 µm | a: PS-P(BuA/AA)-PS |
| Klebestreifen 2 | Dreischichtig | a = 50 µm<br>b = 700 µm<br>a' = 50 µm | a: PS-P(BuA/AA)-PS<br>b: Kraton D1102 + 40% Regalite R1100<br>a': PS-P(BuA/AA)-PS |

(fortgesetzt)

| Bezeichnung | Produktaufbau | Schichtdicke | Materialien |
|---|---|---|---|
| Klebestreifen 3 | Dreischichtig | a = 50 μm<br>b = 700 μm<br>a' = 50 μm | a: PMMA-PBuA-PMMA<br>b: Kraton D1102 + 40% Regalite R1100<br>a': PMMA-PBuA-PMMA |
| Klebestreifen 4 | Einschichtig | a = 650 μm | a: PMMA-PBuA-PMMA |
| tesa® Powerstrip® | Einschichtig | a = 650 μm | a: siehe oben |
| (MMA: Methylmethacrylat; BuA: Butylacrylat; AA: Acrylsäure; S: Styrol; P: Poly-) | | | |

Zunächst sollen die mechanischen Eigenschaften einiger Beispielaufbauten von erfindungsgemäß gestalteten stripfähigen Systemen (Selbstklebestreifen) diskutiert werden. Es ist bekannt, daß die Reißdehnung von Acrylatblockcopolymeren diejenige polydienenthaltender Styrolblockcopolymere typischerweise nicht erreicht (G. Holden, N. R. Legge, R. Quirk, H. E. Schroeder (Hrsg.), Thermoplastic Elastomers, 2. Aufl., 1996, C. Hanser Verlag, München).

Dies belegen gleichfalls die Messungen am Klebestreifen 4. Die Verwendung von aus mehreren Schichten aufgebauten Selbstklebestreifen, die hochdehnbare Mittelschichten auf Basis von Styrolblockcopolymeren enthalten, führt, wie am Klebestreifen 3 zu erkennen, zu einer deutlichen Verbesserung dieser Eigenschaft. Überraschenderweise reißen die Außenschichten enthaltend Acrylatblockcopolymer auch bei hohen Verstreckungen, wie sie beim dehnenden Herauslösen der Klebestreifen aus einer Klebfuge auftreten, nicht. Gleichfalls wird kein Ablösen der Deckschichten von der styrolblockcopolymerhaltigen Mittelschicht beobachtet.

Es zeigt sich überraschenderweise ferner am Beispiel des Klebestreifen 1, daß eine Mittelschicht hoher Reißdehnung gar nicht in jedem Fall notwendig ist, um mit acrylatblockcopolymerhaltigen Selbstklebestreifen eine hohe Reißdehnung zu erreichen. Klebestreifen 1 ist als Einschichtsystem konzipiert und enthält Polystyrolendblöcke. Die Reißdehnung für diese System liegt erstaunlicherweise bei fast 1000 %.

*Zug/Dehnungs-Charakteristik, Stripkraft*

| Bezeichnung | Max. Spannung $\sigma_{max}$ | Max. Dehnung $\varepsilon_{max}$ | Stripspannung |
|---|---|---|---|
| Klebestreifen 1 | 9,5 MPa | 960 % | 0,8 MPa |
| Klebestreifen 2 | 5,9 MPa | 870 % | 1,2 MPa |
| Klebestreifen 3 | 7,0 MPa | 900 % | 1,2 MPa |
| Klebestreifen 4 | 5,9 MPa | 450 % | - |
| tesa® Powerstrip® | 11,3 MPa | 1230 % | 1,8 MPa |

Ein guter qualitativer Test, der zeigt, ob eine Haftklebemasse prinzipiell zur Verwendung in stripfähigen Selbstklebestreifen geeignet ist, prüft die rückstands- und zerstörungsfreie Wiederablösbarkeit von Papierstreifen, die mittels eines die zu prüfende Haftklebemasse enthaltenden Selbstklebestreifens auf Stahl verklebt sind. Diesem einfachen aber aussagekräftigen Test wurden die in obiger Tabelle vorgestellten Selbstklebestreifen unterzogen. Alle ließen sich rückstands- und zerstörungsfrei durch Verstrecken parallel zur Verklebungsebene aus der Klebfuge zwischen Stahl und Papier herauslösen. Obwohl auch chemisch vernetzte klassische Acrylatcopolymere oft eine hohe Dehnbarkeit aufweisen, zeigt sich, daß solche Systeme beim Ablösen durch Verstrecken parallel zur Klebschicht die Oberfläche des Papiers typischerweise beschädigen und/oder daß sie sehr hohe Ablösekräfte (Stripkräfte) erfordern. Eine hohe Reißdehnung allein ist also keine hinreichende Bedingung für stripfähige Selbstklebestreifen. Entscheidend ist des weiteren, ob sich das Selbstklebeband mit niedriger Stripkraft aus der Klebfuge herauslösen läßt und auch ob die Reibung in Kontakt mit einer der Substratoberflächen ausreichend niedrig ist. Letztere Eigenschaften sind dann besonders gut erfüllt, wenn die Haftklebemasse unter Verstreckung ihre Selbstklebrigkeit (Tack) weitestgehend verliert. Ein entsprechender Tackverlust läßt sich mit Hilfe eines Stempel-Tack-Geräts sehr gut quantifizieren. Von den tesa® Powerstrips®, einem stripfähigen haftklebrigen Produkt auf Basis eines Styrolblockcopolymer-Harz-Blends, ist bekannt, daß die Abzugskraft eines Stahlobjekts von einer verstreckten Oberfläche im Stempel-Tack-Test um bis zu 80 % niedriger ist als für den unverstreckten Fall. Chemisch vernetzte Systeme entsprechend des Standes der Technik auf Basis von Acrylatcopolymeren zeigen dagegen einen deutlich niedrigeren Tackverlust. Die erfindungsgemäßen stripfähigen Systeme auf Basis von Acrylatblockcopolymeren zeigen nun überraschenderweise, genau wie Haftklebemassen basierend auf Styrolblockcopolymer-Harz-Blends, einen hohen Tackverlust, wobei es gleichgültig ist, ob der gesamte Selbstklebestreifen aus einer acrylatblockcopolymerhaltigen Haftklebemasse besteht, oder ob bei mehrschichtigen Produktaufbauten lediglich die für die Verklebung relevanten Deckschichten Acrylatblockcopolymere enthalten. In beiden Fällen lassen sich entsprechende Selbstklebestreifen im Gegensatz zu klassischen acrylatcopolymerhaltigen Selbstklebestreifen mit sehr geringer Reibung an dem Stahlsubstrat rückstands- und zerstörungsfrei wieder ablösen. Die Stripkräfte, die zum Herauslösen des Selbstklebestreifens aus der Fuge benötigt werden, liegen ebenfalls im Bereich der Werte, die von Haftklebemassen auf Basis von Styrolblockcopolymeren bekannt sind, und sind daher ein weiteres Indiz, daß sich Acrylatblockcopolymere zum Einsatz als stripfähige Selbstklebestreifen eignen.

*Tackverlust unter Verstreckung*

| Bezeichnung | Abzugskraft (ungedehnt) | Abzugskraft (gedehnt) | Tackverlust |
|---|---|---|---|
| Klebestreifen 1 | 5,0 N | 1,4 N | 75 % |
| Klebestreifen 2 | 5,5 N | 1,4 N | 75 % |
| Klebestreifen 3 | 5,6 N | 1,2 N | 79 % |
| tesa® Powerstrip® | -- | -- | 80 % |
| Vernetztes Polyacrylat | 6,4 N | 4,7 N | 27 % |

Um zudem ein rückstandsfreies Ablösen der Selbstklebestreifen zu ermöglichen, muß sich die Haftklebemasse durch gute kohäsive Eigenschaften auszeichnen. Ein die vorgenannte Eigenschaft beschreibender Materialparameter ist neben der Maximalspannung $\sigma_{max}$ auch die Scherstandzeit, die gleichzeitig Aussagen über die Halteleistung bei verschiedenen Scherbelastungen und Anwendungstemperaturen erlaubt. Für die in den erfindungsgemäßen stripfähigen Systemen verwendeten Klebmassen wurden Scherstandzeiten auf PET-Trägern ermittelt, wobei typischerweise wesentlich höhere Haltezeiten für die hier beschriebenen Acrylatblockcopolymere gefunden wurden als solche, wie sie von klassischen, zum Stand der Technik gehörigen chemisch vernetzten acrylatcopolymerhaltigen Haftklebemassen bekannt sind. So konnten für acrylatblockcopolymerhaltige Haftklebemassen selbst bei 70 °C unter Belastung von 10 N Haltezeiten von > 10.000 min gefunden werden, sowie ebenso bei 23 °C für 20 N.

An dieser Stelle sei auch auf die typischerweise erreichbaren Klebkräfte von 4 bis 6 N/cm für eine Schichtdicke von 50 µm hingewiesen. Es zeigt sich, daß ein gewisser Gehalt an Acrylsäure im Polymerblock P(B) zu einer deutlichen Steigerung der Klebkraft auf Stahl führt. Es bieten sich daher bevorzugt Polymerisationsmethoden zur Herstellung der Haftklebemassen der erfindungsgemäßen Systeme an, die die Copolymerisation von Acrylsäure erlauben, was typischerweise von radikalischen Methoden geleistet werden kann. Ebenso sind die oben beschriebenen Polymerisationsprozesse auch in der Lage, solche Monomere in ein Acrylatblockcopolymer einzubauen, so daß gute Klebkräfte auch auf anderen Oberflächen erreicht werden. Als Beispiel sei hier die Verwendung von 2-Ethylhexylacrylat genannt, dessen Einbau zu einer Haftklebemasse führt, die zur Verklebung auf unpolaren Oberflächen besonders geeignet ist.

*Scherstandzeiten, Klebkraft (Stahl)*

| Material | 23 °C, 10N | 40 °C, 10 N | 70 °C, 10 N | 23 °C, 20 N | Peel 180° |
|---|---|---|---|---|---|
| PS-P(BuA/AA)-PS | > 10000 min | > 10000 min | > 10000 min | > 10000 min | 6,0 N/cm |
| PMMA-PBuA-PMMA | > 10000 min | > 10000 min | > 10000 min | > 10000 min | 4,4 N/cm |

Als eine zusätzliche Methode erlauben Thermoscherwegmessungen differenzierte Aussagen über das Scherverhalten von Haftklebemassen als Funktion der Temperatur. Wahlweise werden unterschiedliche Scherbelastungen vorgegeben und damit unterschiedliche Anforderungen an die Halteleistung simuliert. Zur Beschreibung der thermischen Belastbarkeit der Klebbindungen werden hier zwei Temperaturen herangezogen, zum einen diejenige Temperatur, bei der die Verklebung eine Scherung von 250 µm aufweist, sowie zum anderen diejenige Temperatur, bei der die Verklebung versagt. Es zeigt sich auch hier, daß acrylatblockcopolymerhaltige Haftklebemassen klassischen, chemisch vernetzten Acrylatblockcopolymeren leistungsmäßig überlegen sind.

*Thermoscherweg*

| Material | $T_{250\ \mu m}$ | | $T_{Bruch}$ | |
|---|---|---|---|---|
| | 100 g Last | 500 g Last | 100 g Last | 500 g Last |
| PS-P(BuA/AA)-PS | 104 °C | 68 °C | 120 °C | 85 °C |

(fortgesetzt)

| Material | $T_{250\ \mu m}$ | | $T_{Bruch}$ | |
|---|---|---|---|---|
| | 100 g Last | 500 g Last | 100 g Last | 500 g Last |
| PMMA-PBuA-PMMA | 155 °C | 72 °C | 170 °C | 72 °C |
| Vernetztes Acrylat | -- | 30 °C | -- | 38 °C |

Im Gegensatz zu stripfähigen Selbstklebestreifen auf Basis von Styrolblockcopolymeren zeigen Systeme auf Basis von Acrylatblockcopolymeren den Vorteil, daß sie leicht in wasserklar-transparenter Erscheinungsform hergestellt werden können. Dadurch, daß Acrylate unanfällig gegen UV-Strahlung sind, kann auf Additive verzichtet werden, die zu einer Trübung oder Färbung der Haftklebemassen führen. Alle erfindungsgemäßen stripfähigen Selbstklebestreifen auf Acrylatbasis zeichnen sich durch wasserklare Transparenz aus. Daß trotz Verzicht auf UV-Schutzmittel eine gute Alterungsstabilität gewährleistet ist, zeigen UV-Tests. Zum direkten Vergleich wurden acrylatblockcopolymerhaltige Selbstklebestreifen auf Glasplatten verklebt. Ein Teil dieser Muster wurde unter einer Sonnenlichtlampe, deren Spektrum auch den UV-Bereich einschließt, bestrahlt. Die bestrahlten Muster zeigten genau wie die unbestrahlten Vergleichsmuster wasserklare Transparenz. Auch die Klebkraft änderte sich kaum (der leichte Anstieg ist auf die etwas erhöhte Temperatur durch Bestrahlung zurückzuführen). Eine Untersuchung des Substrats zeigte für bestrahlte und unbestrahlte Muster keinerlei Rückstände. Ebenso zeigte auch die Haftklebemasse keine Defekte und konnte wiederverwendet werden. Es werden deutliche Vorteile im Vergleich zu Systemen auf Styrolblockcopolymerbasis erkennbar.

*Alterungsstabilität*

| Material | Bestrahlungsdauer | Optische Erscheinung nach Bestrahlung | Klebkraft 180° (Glas) | Rückstände auf Substrat |
|---|---|---|---|---|
| PMMA-PBuA-PMMA | 0 Tage | Transparent, farblos | 7,3 N/cm | Keine |
| PMMA-PBuA-PMMA | 7 Tage | Transparent, farblos | 8,3 N/cm | Keine |
| tesa® Powerstrip® | 0 Tage | Nicht transparent, altweiß | 40 N/cm* | Keine |
| tesa® Powerstrip® | 7 Tage | Nichttransparent, altweiß | Nicht bestimmbar** | Reißen |
| *) Powerstrips rückseitig verstärkt mit glasfaserverstärktem Klebeband (z. B. tesa® pack 53311), Abzugswinkel: 90° **) Klebestreifen irreversibel mit Glas verklebt | | | | |

Ein wichtiger Vorteil von Haftklebemassen auf Basis von Acrylatblockcopolymeren ist, auch ohne Harze sehr gute Klebeigenschaften zu zeigen, weswegen Harzabmischungen nicht, wie z. B. bei Styrolblockcopolymerklebemassen, zwingend erforderlich sind. Abschließend sei trotzdem noch aufgezeigt, daß die überraschenden Ergebnisse für die bislang vorgestellten Produktaufbauten auch durch harzabgemischte Haftklebemassen erreichbar sind. Als Beispiel soll hier ein Dreischichtsystem dienen (a: PS-P(BuA/AA)-PS + 20 % Norsolene M1080 (Cray Valley), 50 $\mu$m; b: Kraton D1102 + 40 % Regalite R1100, 650 $\mu$m; a': PS-P(BuA/AA)-PS + 20 % Norsolene M1080, 50 $\mu$m). Die resultierenden Daten sind mit den für die oben beschriebenen nichtabgemischten Systeme vergleichbar.

## Patentansprüche

1. Verwendung von Haftklebemassen auf Basis von zumindest einem Blockcopolymer in einem stripfähigem System zur rückstands- und zerstörungsfrei wiederlösbaren Verklebung auf einem Material oder zur rückstands- und zerstörungsfrei wiederlösbaren Verklebung zweier Materialien miteinander, **dadurch gekennzeichnet, daß** das zumindest eine Blockcopolymer zumindest teilweise auf Basis von (Meth-)Acrylsäurederivaten aufgebaut ist, wobei die Blockcopolymere mindestens die Einheit P(A)-P(B)-P(A) aus wenigstens einem Polymerblock P(B) und wenigstens zwei Polymerblöcken P(A) aufweisen, wobei der Aufbau der Blockcopolymere durch eine oder mehrere

der folgenden allgemeinen Formeln beschrieben werden kann:

P(A)-P(B)-P(A) (I)

P(B)-P(A)-P(B)-P(A)-P(B) (II)

$[P(A)-P(B)]_nX$ (III)

$[P(B)-P(A)-P(B)]_nX$ (IV)

$[P(A)-P(B)]_nX[P(B)]_m$ (V),

wobei

- P(A) unabhängig voneinander Homo- oder Copolymerblöcke aus Monomeren A repräsentieren, wobei die Polymerblöcke P(A) jeweils eine Erweichungstemperatur im Bereich von + 20 °C bis + 175 °C aufweisen,
- P(B)) unabhängig voneinander Homo- oder Copolymerblöcke aus Monomeren B repräsentieren, wobei die Polymerblöcke P(B) eine Erweichungstemperatur im Bereich von - 100 °C bis + 10 °C aufweisen,
- die Monomere B zu 75 bis 100 Gew.-% aus der Gruppe der Acrylsäure- und/oder Methacrylsäurederivate der allgemeinen Struktur $CH_2=C(R^1)(COOR^2)$, mit $R^1$ = H oder $CH_3$ und $R^2$ = H oder lineare, verzweigte oder ringförmige Kohlenwasserstoffreste mit 1 bis 30 Kohlenstoffatomen, und zu 0 bis 25 Gew.-% aus Vinylverbindungen gewählt werden,
- die Monomere A zu mindestens 75 Gew-% aus der Gruppe der Monomere, umfassend Vinylaromaten, Methylmethacrylat, Cyclohexyl-methacrylat, Isobornylacrylat; und optional bis zu 25 Gew.-% aus der Gruppe der Monomere B gewählt werden,
- die Polymerblöcke P(A) und P(B) nicht homogen miteinander mischbar sind,
- n = 2 bis 12, m = 1 bis 12 und X einen di- bzw. multifunktionellen Verzweigungsbereich darstellt,

wobei die Verklebung durch dehnendes Verstrecken des stripfähigen Systems im wesentlichen in seiner Verklebungsebene wiederabgelöst wird.

2. Verwendung nach zumindest einem der vorangehenden Ansprüche, **dadurch gekennzeichnet, daß** das zumindest eine Blockcopolymer einen symmetrischen Aufbau derart aufweist, daß in der Kettenlänge und/oder der chemischen Struktur identische Polymerblöcke P(A) und/oder daß in der Kettenlänge und/oder der chemischen Struktur identische Polymerblöcke P(B) vorliegen.

3. Verwendung nach zumindest einem der vorangehenden Ansprüche, **dadurch gekennzeichnet, daß** das zumindest eine Blockcopolymer eines oder mehrere der folgenden Kriterien aufweist:

- eine Molmasse $M_n$ zwischen 10.000 und 600.000 g/mol, bevorzugt zwischen 30.000 und 400.000 g/mol, besonders bevorzugt zwischen 50.000 und 300.000 g/mol,
- eine Polydispersität $D = M_w/M_n$ von nicht mehr als 3,
- einen Anteil der Polymerblöcke P(A) zwischen 5 und 49 Gew.-%, bevorzugt zwischen 7,5 und 35 Gew.-%, insbesondere zwischen 10 und 30 Gew.-%, bezogen auf die Triblockcopolymerzusammensetzung.

4. Verwendung nach zumindest einem der vorangehenden Ansprüche, **dadurch gekennzeichnet, daß** das Verhältnis der Kettenlängen der Polymerblöcke P(A) zu denen der Polymerblöcke P(B) so gewählt wird, daß die Polymerblöcke P(A) als disperse Phase ("Domänen") in einer kontinuierlichen Matrix der Polymerblöcke P(B) vorliegen, insbesondere als kugelförmige oder verzerrt kugelförmige Domänen.

5. Verwendung nach zumindest einem der vorangehenden Ansprüche, **dadurch gekennzeichnet, daß** die Haftklebemasse einen Blend eines oder mehrerer Blockcopolymere entsprechend den vorstehenden Ansprüchen
mit zumindest einem Blockcopolymer, welches die invers aufgebaute Einheit P(B)-P(A)-P(B) enthält, und/oder mit zumindest einem Diblockcopolymer P(A)-P(B),

- wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von + 20 °C

bis + 175 °C aufweisen,
- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von -100°C bis + 10 °C aufweisen,

und/oder mit zumindest einem Polymeren P'(A) und/oder P'(B),

- wobei die Polymere P'(A) Homo- und/oder Copolymere aus den Monomeren A repräsentieren, wobei die Polymere P'(A) jeweils eine Erweichungstemperatur im Bereich von + 20 °C bis + 175 °C aufweisen,
- wobei die Polymere P'(B) Homo- und/oder Copolymere aus den Monomeren B repräsentieren, wobei die Polymere P'(B) jeweils eine Erweichungstemperatur im Bereich von - 100 °C bis + 10 °C aufweisen,
- und wobei die Polymere P'(A) beziehungsweise P'(B) bevorzugt mit den Polymerblöcken P(A) beziehungsweise P(B) mischbar sind,

darstellt.

**6.** Verwendung nach zumindest einem der vorangehenden Ansprüche, **dadurch gekennzeichnet, daß** das zumindest eine Diblockcopolymer eines oder mehrere der folgenden Kriterien aufweist:

- eine Molmasse $M_n$ zwischen 5.000 und 600.000 g/mol, bevorzugt zwischen 15.000 und 400.000 g/mol, besonders bevorzugt zwischen 30.000 und 300.000 g/mol,
- eine Polydispersität D = $M_w/M_n$ von nicht mehr als 3,
- einen Anteil der Polymerblöcke P(A) zwischen 3 und 50 Gew.-%, bevorzugt zwischen 5 und 35 Gew.-%, bezogen auf die Diblockcopolymer-zusammensetzung.

**7.** Verwendung nach zumindest einem der vorangehenden Ansprüche, **dadurch gekennzeichnet, daß** die Polymerblöcke P(B) und/oder die Polymere P'(B) zumindest teilweise eine oder mehrere aufgepfropfte Seitenketten enthält.

**8.** Verwendung nach zumindest einem der vorangehenden Ansprüche, **dadurch gekennzeichnet, daß** der Haftklebemasse Klebharze beigemischt sind, insbesondere solche, die mit den Polymerblöcken P(B) verträglich sind, bevorzugt zu einem Gewichtsanteil bis zu 40 Gew.-%, sehr bevorzugt bis zu 30 Gew.-%, bezogen auf die Haftklebemasse, und/oder daß der Haftklebemasse Weichmacher, Füllstoffe, Keimbildner, Blähmittel, Compoundierungsmittel und/oder Alterungsschutzmittel zugesetzt sind.

**9.** Verwendung nach zumindest einem der vorangehenden Ansprüche, **dadurch gekennzeichnet, dass** das stripfähige System einen einschichtigen Produktaufbau aufweist, wobei die Schicht aus einer Haftklebemasse entsprechend einem der vorangehenden Ansprüche besteht und bevorzugt eine Dicke von mindestens 100 µm, besonders bevorzugt von mindestens 350 µm aufweist.

**10.** Verwendung nach zumindest einem der Ansprüche 1 bis 8 **dadurch gekennzeichnet, dass** das stripfähige System einen mehrschichtigen Produktaufbau aufweist, insbesondere einen zwei- oder dreischichtigen Produktaufbau, wobei zumindest eine der Schichten aus einer Haftklebemasse entsprechend einem der vorangehenden Ansprüche besteht und bevorzugt eine Dicke von mindestens 10 µm, besonders bevorzugt von mindestens 25 µm aufweist, und wobei bevorzugt eine der weiteren Schichten aus einem Elastomer besteht und bevorzugt eine Dicke von mindestens 100 µm, besonders bevorzugt von mindestens 200 µm aufweist.

**11.** Verwendung nach zumindest einem der vorangehenden Ansprüche, **dadurch gekennzeichnet, dass** das stripfähige System zumindest eine Trägerschicht aufweist.

## Claims

**1.** Use of pressure sensitive adhesives based on at least one block copolymer in a strippable system for residuelessly and nondestructively redetachable bonding on a material or for residuelessly and nondestructively redetachable bonding of two materials to one another, **characterized in that** the at least one block copolymer is based at least in part on (meth)acrylic acid derivatives, the block copolymers containing at least the unit P(A)-P(B)-P(A) composed of at least one polymer block P(B) and at least two polymer blocks P(A), where the construction of the block

copolymers can be described by one or more of the following general formulae:

P(A)-P(B)-P(A) (I)

P(B)-P(A)-P(B)-P(A)-P(B) (II)

$[P(A)-P(B)]_nX$ (III)

$[P(B)-P(A)-P(B)]_nX$ (IV)

$[P(A)-P(B)]_nX[P(B)]_m$ (V),

where

- P(A) independently of one another represent homopolymer or copolymer blocks of monomers A, the polymer blocks P (A) each having a softening temperature in the range from + 20°C to + 175°C,
- P(B) independently of one another represent homopolymer or copolymer blocks of monomers B, the polymer blocks P(B) having a softening temperature in the range from - 100°C to + 10°C,
- the monomers B are chosen 75 to 100% by weight from the group of acrylic and/or methacrylic acid derivatives of the general structure $CH_2=CH(R^1)(COOR^2)$, where $R^1$ = H or $CH_3$ and $R^2$ = H or linear, branched or cyclic hydrocarbon radicals having from 1 to 30 carbon atoms, and 0 to 25% by weight from vinyl compounds,
- the monomers A are chosen at least 75% by weight from the group of monomers encompassing vinylaromatics, methyl methacrylate, cyclohexyl methacrylate and isobornyl acrylate; and optionally up to 25% by weight from the group of monomers B,
- the polymer blocks P(A) and P(B) are not homogeneously miscible with one another,
- n = 2 to 12, m = 1 to 12, and X represents a difunctional or polyfunctional branching region,

where the bond is redetached by extensive stretching of the strippable system substantially in its bond plane.

**2.** Use according to at least one of the preceding claims, **characterized in that** the at least one block copolymer has a symmetrical construction such that there are polymer blocks P(A) identical in chain length and/or chemical structure and/or there are polymer blocks P(B) identical in chain length and/or chemical structure.

**3.** Use according to at least one of the preceding claims, **characterized in that** the at least one block copolymer meets one or more of the following criteria:

- a molar mass $M_n$ of between 10 000 and 600 000 g/mol, preferably between 30 000 and 400 000 g/mol, with particular preference between 50 000 and 300 000 g/mol,
- a polydispersity $D = M_w/M_n$ of not more than 3,
- a polymer block P (A) fraction of between 5 and 49% by weight, preferably between 7.5 and and 35% by weight, in particular between 10 and 30% by weight, based on the triblock copolymer composition.

**4.** Use according to at least one of the preceding claims, **characterized in that** the ratio of the chain lengths of the polymer blocks P(A) to those of the polymer blocks P(B) is chosen such that the polymer blocks P(A) are present in the form of a disperse phase ("domains") in a continuous matrix of the polymer blocks P(B), in particular in the form of spherical or distortedly spherical domains.

**5.** Use according to at least one of the preceding claims, **characterized in that** the pressure sensitive adhesive comprises a blend of one or more block copolymers in accordance with the above claims with at least one block copolymer which contains the inversely constructed unit P(B)-P(A)-P(B), and/or with at least one diblock copolymer P(A)-P(B),

- wherein the polymer blocks P(A) independently of one another represent homopolymer or copolymer blocks of the monomers A, the polymer blocks P(A) each having a softening temperature in the range from + 20°C to + 175°C,
- and wherein the polymer blocks P(B) independently of one another represent homopolymer or copolymer blocks of the monomers B, the polymer blocks P(B) each having a softening temperature in the range from - 100°C to + 10°C,

and/or with at least one polymer P'(A) and/or P'(B),

- wherein the polymers P'(A) represent homopolymers and/or copolymers of the monomers A, the polymers P'(A) each having a softening temperature in the range from + 20°C to + 175°C,
- wherein the polymers P'(B) represent homopolymers and/or copolymers of the monomers B, the polymers P'(B) each having a softening temperature in the range from - 100°C to + 10°C,
- and wherein the polymers P'(A) and/or P'(B) are preferably miscible with the polymer blocks P(A) and/or P(B), respectively.

**6.** Use according to at least one of the preceding claims, **characterized in that** the at least one diblock copolymer meets one or more of the following criteria:

- a molar mass $M_n$ of between 5 000 and 600 000 g/mol, preferably between 15 000 and 400 000 g/mol, with particular preference between 30 000 and 300 000 g/mol,
- a polydispersity $D = M_w/M_n$ of not more than 3,
- a polymer block P(A) fraction of between 3 and 50% by weight, preferably between 5 and 35% by weight, based on the diblock copolymer composition.

**7.** Use according to at least one of the preceding claims, **characterized in that** the polymer blocks P (B) and/or the polymers P'(B) contain, at least in part, one or more grafted-on side chains.

**8.** Use according to at least one of the preceding claims, **characterized in that** the pressure sensitive adhesive is admixed with tackifier resins, especially those compatible with the polymer blocks P(B), preferably in a weight fraction of up to 40% by weight, very preferably up to 30% by weight, based on the pressure sensitive adhesive, and/or **in that** the pressure sensitive adhesive is admixed with plasticizers, fillers, nucleators, expandants, compounding agents and/or aging inhibitors.

**9.** Use according to at least one of the preceding claims, **characterized in that** the strippable system comprises a single-layer product construction in which the layer is composed of a pressure sensitive adhesive in accordance with one of the preceding claims and has a thickness of preferably at least 100 μm, with particular preference at least 350 μm.

**10.** Use according to at least one of Claims 1 to 8, **characterized in that** the strippable system comprises a multilayer product construction, in particular a two-layer or three-layer product construction, in which at least one of the layers is composed of a pressure sensitive adhesive in accordance with one of the preceding claims and has a thickness of preferably at least 10 μm, with particular preference at least 25 μm, and in which preferably one of the further layers is composed of an elastomer and has a thickness of preferably at least 100 μm, with particular preference at least 200 μm.

**11.** Use according to at least one of the preceding claims, **characterized in that** the strippable system has at least one backing or carrier layer.

## Revendications

**1.** Utilisation de matériaux adhésifs de contact à base d'au moins un copolymère séquencé dans un système pelable pour le collage décollable sans résidu et sans destruction sur un matériau ou pour le collage décollable sans résidu et sans destruction de deux matériaux l'un avec l'autre, **caractérisée en ce que**
ledit au moins un copolymère séquencé est formé au moins partiellement à base de dérivés de l'acide (méth)acrylique, les copolymères séquencés comprenant au moins l'unité P(A)-P(B)-P(A) constituée par au moins une séquence polymère P(B) et au moins deux séquences polymères P(A), la structure des copolymères séquencés pouvant être décrite par une ou plusieurs des formules générales suivantes :

P(A)-P(B)-P(A) (I)

P(B)-P(A)-P(B)-P(A)-P(B) (II)

$[P(A)-P(B)]_nX$ (III)

$[P(B)-P(A)-P(B)]_nX$ (IV)

$[P(A)-P(B)]_nX[P(B)]_m$ (V),

dans lesquelles

- les P(A) représentent indépendamment les uns des autres des séquences d'homo- ou de copolymères de monomères A, les séquences polymères P(A) présentant chacune une température de ramollissement dans la plage allant de +20 °C à +175 °C,
- les P(B) représentent indépendamment les uns des autres des séquences d'homo- ou de copolymères de monomères B, les séquences polymères P(B) présentant une température de ramollissement dans la plage allant de - 100 °C à +10 °C,
- les monomères B sont choisis à hauteur de 75 à 100 % en poids dans le groupe des dérivés de l'acide acrylique et/ou de l'acide méthacrylique de structure générale $CH_2=C(R^1)(COOR^2)$, avec $R^1$ = H ou $CH_3$ et $R^2$ = H ou des radicaux hydrocarbonés linéaires, ramifiés ou cycliques de 1 à 30 atomes de carbone,
et à hauteur de 0 à 25 % en poids parmi les composés de vinyle,
- les monomères A sont choisis à hauteur d'au moins 75 % en poids dans le groupe de monomères comprenant les composés aromatiques de vinyle, le méthacrylate de méthyle, le méthacrylate de cyclohexyle, l'acrylate d'isobornyle ;
et éventuellement à hauteur de jusqu'à 25 % en poids dans le groupe des monomères B,
- les séquences polymères P(A) et P(B) ne sont pas miscibles de manière homogène les unes avec les autres,
- n = 2 à 12, m = 1 à 12 et X représente une zone de ramification bi- ou multifonctionnelle,
le collage pouvant être décollé par étirement extensible du système pelable essentiellement dans son plan de collage.

**2.** Utilisation selon au moins l'une quelconque des revendications précédentes, **caractérisée en ce que** ledit au moins un copolymère séquencé présente une structure symétrique telle que des séquences polymères P(A) de longueur de chaîne identique et/ou de structure chimique identique sont présentes et/ou telle que des séquences polymères P(B) de longueur de chaîne identique et/ou de structure chimique identique sont présentes.

**3.** Utilisation selon au moins l'une quelconque des revendications précédentes, **caractérisée en ce que** ledit au moins un copolymère séquencé présente un ou plusieurs des critères suivants :

- une masse molaire $M_n$ comprise entre 10 000 et 600 000 g/mol, de préférence entre 30 000 et 400 000 g/mol, de manière particulièrement préférée entre 50 000 et 300 000 g/mol,
- une polydispersité $D = M_w/M_n$ inférieure ou égale à 3,
- une proportion de séquences polymères P(A) comprise entre 5 et 49 % en poids, de préférence entre 7,5 et 35 % en poids, notamment entre 10 et 30 % en poids, par rapport à la composition de copolymère triséquencé.

**4.** Utilisation selon au moins l'une quelconque des revendications précédentes, **caractérisée en ce que** le rapport entre les longueurs de chaîne des séquences polymères P(A) et celles des séquences polymères P(B) est choisi de telle sorte que les séquences polymères P(A) se présentent sous la forme d'une phase dispersée (« domaines ») dans une matrice continue des séquences polymères P(B), notamment sous la forme de domaines sphériques ou sphériques biaisés.

**5.** Utilisation selon au moins l'une quelconque des revendications précédentes, **caractérisée en ce que** le matériau adhésif de contact est un mélange d'un ou de plusieurs copolymères séquencés selon les revendications précédentes
avec au moins un copolymère séquencé qui contient l'unité de structure inverse P(B)-P(A)-P(B), et/ou avec au moins un copolymère diséquencé P(A)-P(B),

- les séquences polymères P(A) représentant indépendamment les unes des autres des séquences d'homo- ou de copolymères des monomères A, les séquences polymères P(A) présentant chacune une température de ramollissement dans la plage allant de +20 °C à +175 °C,
- et les séquences polymères P(B) représentant indépendamment les unes des autres des séquences d'homo- ou de copolymères des monomères B, les séquences polymères P(B) présentant chacune une température de ramollissement dans la plage allant de -100 °C à +10 °C, et/ou avec au moins un polymère P'(A) et/ou P'(B),

- les polymères P' (A) représentant des homo- et/ou copolymères des monomères A, les polymères P'(A) présentant chacun une température de ramollissement dans la plage allant de +20 °C à +175 °C,
- les polymères P' (B) représentant des homo- et/ou copolymères des monomères B, les polymères P'(B) présentant chacun une température de ramollissement dans la plage allant de -100 °C à +10 °C,
- et les polymères P'(A) et P'(B) étant de préférence miscibles avec les séquences polymères P(A) et P(B).

**6.** Utilisation selon au moins l'une quelconque des revendications précédentes, **caractérisée en ce que** ledit au moins un copolymère diséquencé présente un ou plusieurs des critères suivants :

- une masse molaire $M_n$ comprise entre 5 000 et 600 000 g/mol, de préférence entre 15 000 et 400 000 g/mol, de manière particulièrement préférée entre 30 000 et 300 000 g/mol,
- une polydispersité $D = M_w/M_n$ inférieure ou égale à 3,
- une proportion de séquences polymères P(A) comprise entre 3 et 50 % en poids, de préférence entre 5 et 35 % en poids, par rapport à la composition de copolymère diséquencé.

**7.** Utilisation selon au moins l'une quelconque des revendications précédentes, **caractérisée en ce que** les séquences polymères P(B) et/ou les polymères P'(B) contiennent au moins en partie une ou plusieurs chaînes latérales greffées.

**8.** Utilisation selon au moins l'une quelconque des revendications précédentes, **caractérisée en ce que** des résines adhésives sont incorporées dans le matériau adhésif de contact, notamment des résines adhésives qui sont compatibles avec les séquences polymères P(B), de préférence en une proportion en poids allant jusqu'à 40 % en poids, de manière particulièrement préférée allant jusqu'à 30 % en poids, par rapport au matériau adhésif de contact, et/ou **en ce que** des plastifiants, des charges, des agents de nucléation, des agents gonflants, des agents de malaxage et/ou des agents antivieillissement sont ajoutés au matériau adhésif de contact.

**9.** Utilisation selon au moins l'une quelconque des revendications précédentes, **caractérisée en ce que** le système pelable présente une structure de produit monocouche, la couche étant constituée par un matériau adhésif de contact selon l'une quelconque des revendications précédentes, et présentant de préférence une épaisseur d'au moins 100 μm, de manière particulièrement préférée d'au moins 350 μm.

**10.** Utilisation selon au moins l'une quelconque des revendications 1 à 8, **caractérisée en ce que** le système pelable présente une structure de produit multicouche, notamment une structure de produit bi- ou tricouche, au moins une des couches étant constituée par un matériau adhésif de contact selon l'une quelconque des revendications précédentes, et présentant de préférence une épaisseur d'au moins 10 μm, de manière particulièrement préférée d'au moins 25 μm, et une des autres couches étant de préférence constituée par un élastomère, et présentant de préférence une épaisseur d'au moins 100 μm, de manière particulièrement préférée d'au moins 200 μm.

**11.** Utilisation selon au moins l'une quelconque des revendications précédentes, **caractérisée en ce que** le système pelable comprend au moins une couche support.

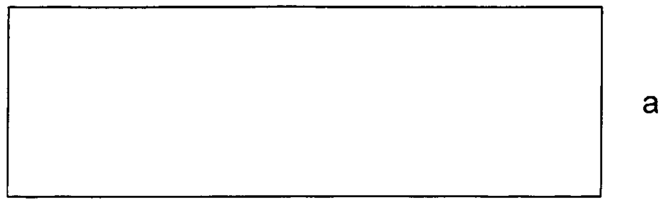


Fig. 1

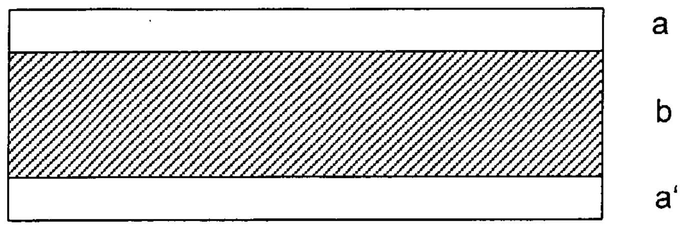


Fig. 2

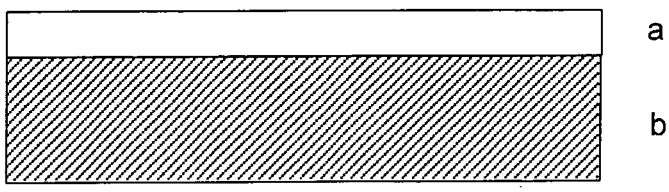


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3331016 A1
- US 4024312 A
- WO 9211332 A
- WO 9211333 A
- WO 9506691 A
- DE 19531696 A1
- DE 19649727 A1
- DE 19649728 A1
- DE 19649729 A1
- DE 19720145 A1
- DE 19820858 A1
- DE 19708366 A1
- DE 4222849 A1
- DE 4428587 A1
- DE 4431914 A1
- DE 19842864 A1
- DE 19842865 A1
- DE 19938693 A1
- WO 9803601 A1
- DE 4233872 A1
- DE 19511288 A1
- US 5672402 A
- WO 9421157 A1
- WO 9211332 A1
- WO 9211333 A1
- WO 9506691 A1
- US 5314962 A
- US 5264527 A
- JP 11302617 A
- EP 824110 A1
- US 6069205 A
- EP 921170 A1
- WO 9801478 A1
- WO 0039233 A1
- EP 1008640 A
- EP 349270 A
- US 5403658 A
- US 4581429 A
- WO 9813392 A1
- EP 735052 A1
- WO 9624620 A1
- WO 9844008 A1
- DE 19949352 A1
- EP 0824111 A1
- EP 826698 A1
- EP 841346 A1
- EP 850957 A1
- US 5945491 A
- US 5854364 A
- US 5789487 A
- WO 9931144 A1
- DE 4339604 A1
- DE 19627400 A1
- DE 4222849 C2


### In der Beschreibung aufgeführte Nicht-Patentliteratur


- **T. OTSU.** *Journal of Polymer Science A Polymer Chemistry,* 2000, vol. 38, 2121
- Thermoplastic Elastomers. C. Hanser Verlag, 1996
- *München oder Macromolecules,* 1995, vol. 28, 7886
- **HAWKER.** Beitrag zur Hauptversammlung. American Chemical Society, 1997
- **HUSEMANN.** *Beitrag zum IUPAC World-Polymer Meeting,* 1998
- *Macromolecules,* 1995, vol. 28, 7886
- *Macromolecules,* 2000, vol. 33, 243-245
- **FOUASSIER.** Photoinititation, Photopolymerization and Photocuring: Fundamentals and Applications. Hanser-Verlag, 1995
- **CARROY et al.** Chemistry and Technology of UV and EB Formulation for Coatings, Inks and Paints. SITA, 1994
- Eine ausführliche Beschreibung des Stands der Technik und die wichtigsten Verfahrensparameter findet man bei Skelhorne, Electron Beam Processing. Chemistry and Technology of UV and EB formulation for Coatings, Inks and Paints. SITA, 1991, vol. 1
- *Vorschrift von Synth. Comm.,* 1988, vol. 18 (13), 1531
- *Journal of American Chemical Society,* 1999, vol. 121 (16), 3904